# EUROPEAN PATENT APPLICATION

(11) **EP 4 803 359 A1**
(43) Date of publication of application: **09.09.2026**
(21) Application number: 24884734.5
(22) Date of filing: 29.10.2024
(51) Int. Cl.: B60N 2/14

(54) **ROTATING DEVICE AND SEAT**

(30) Priority: 31.10.2023 CN 202311428798; 08.02.2024 CN 202410176279
(71) Applicant: Yanfeng International Automotive Technology Co., Ltd., Shanghai 201306 (CN)
(72) Inventor: LIU, Baoshi, Shanghai 201306 (CN); CAO, Wei, Shanghai 201306 (CN); ZHANG, Kai, Shanghai 201306 (CN); QIAN, Youtao, Shanghai 201306 (CN); CHEN, Fangfang, Shanghai 201306 (CN)
(74) Representative: Colombo, Stefano Paolo
(86) International application number: PCT/CN2024/128165
(87) International publication number: WO 2025/092731

(57) **Abstract**

The present disclosure relates to A rotating device, comprising:
a fixed disc;
a movable disc rotatably provided on the fixed disc via rolling elements;
a driving device configured to drive the movable disc to rotate relative to the fixed disc; wherein the driving device drives the movable disc to rotate relative to the fixed disc via a gear pair; characterized in that the rotating device further comprises:
at least one restraining mechanism configured to restrict rotation of the movable disc, wherein when the driving device drives the movable disc to stop at any position, the restraining mechanism restricts rotation of the movable disc, causing the driving device to stall, so as to eliminate the gap between adjacent teeth in the gear pair.

The present disclosure also relates to a seat comprising the aforementioned rotating device. The present disclosure eliminates the gap between adjacent teeth in the gear pair by causing the driving device to stall.

## Description

This application claims priority to Chinese Patent Application No. CN202311428798.5, filed on October 31, 2023, and Chinese Patent Application No. CN202410176279.2, filed on February 8, 2024. The disclosures of these Chinese applications are incorporated herein by reference in their entirety.

### Technical Field

The present disclosure relates to the field of locking mechanisms for rotating seats, and particularly to a rotating device and a seat.

### Background of Invention

Currently, most rotating seats employ a rotation structure driven by a drive gear and a drive rack to rotate the seat. However, after meshing, a small amount of gap remains between the drive gear and the drive rack. This gap causes the seat to wobble after stopping rotation, preventing complete fixed locking and adversely affecting user experience.

Chinese Published Patent No. CN109823239B discloses an electrically rotatable automobile seat device, which provides an irregular tooth at the end of an arcuate rack that cooperates with the drive motor to induce stall and thereby eliminate gap. However, due to the different volume between the irregular tooth and the driving meshing tooth, an additional horizontal component force is exerted on the rotating disc during stall, causing the seat to deviate from its originally designed position.

Chinese Published Patent No. CN108556691B discloses an electrically rotatable seat mechanism, which limits the rotation angle of the seat by providing an arcuate slot in the rotating bracket, cooperating with a motor and the arcuate slot. This technical solution only enables locking at the end positions and cannot achieve locking at intermediate positions. Moreover, the larger the angle of the arcuate slot, the larger the required opening area in the rotating bracket, thereby affecting the rigidity of the bracket.

Korean Published Patent No. KR1020230072736A discloses a brake actuator and an electrically rotatable seat equipped therewith. The invention employs a dual-motor drive structure engaging with a transmission ring gear at the bottom of the rotating seat: one drive motor rotates the transmission ring gear, while a stall motor brakes the transmission ring gear. The stall motor uses an internally integrated electronically controlled clutch brake that solely performs braking of the transmission ring gear. However, motors equipped with overrunning clutches increase the overall assembly cost.

Chinese Published Patent Applications Nos. CN116279039A and CN116039464A each disclose a power rotating device for vehicle seats, wherein a movable disc and a fixed disc are connected via a bidirectional clutch, and braking rollers lock the movable disc and the fixed disc together, allowing the seat to be rotated only by the motor side. Although this solves the wobbling issue, the clutch components are difficult to manufacture and occupy significant interior space.

### Summary of Invention

In view of the drawbacks present in existing electric seat rotation structures-specifically, noise and wobbling caused by gap in the meshing structure between the drive gear and the drive rack when the drive motor drives the movable disc to stop at any arbitrary position-the present disclosure provides a rotating device capable of eliminating such gap in the meshing structure between the drive gear and the drive rack when the drive motor drives the movable disc to stop at any arbitrary position.

To achieve the above objective, a first aspect of the present disclosure relates to a rotating device comprising:
a fixed disc;
a movable disc rotatably provided on the fixed disc via rolling elements;
a driving device configured to drive the movable disc to rotate relative to the fixed disc; wherein the driving device drives the movable disc to rotate relative to the fixed disc via a gear pair; characterized in that the rotating device further comprises:
at least one restraining mechanism configured to restrict rotation of the movable disc, wherein when the driving device drives the movable disc to stop at any position, the restraining mechanism restricts rotation of the movable disc, causing the driving device to stall, so as to eliminate the gap between adjacent teeth in the gear pair.

In some embodiments of the disclosure, the driving device comprises a drive motor; wherein the gear pair comprises a drive rack fixed on either the movable disc or the fixed disc, and a drive gear fixed on an output shaft of the drive motor.

In some embodiments of the disclosure, the restraining mechanism comprises a compensation motor and at least one actuating tooth fixed on an output shaft of the compensation motor; wherein during rotation of the movable disc driven by the drive motor via the gear pair, the actuating tooth does not mesh with the drive rack; when the drive motor drives the movable disc to stop at any position, the compensation motor rotates in a direction opposite to the driving direction of the movable disc, driving the actuating tooth to rotate to a meshing position where it meshes with the drive rack and restricts rotation of the movable disc.

In some embodiments of the disclosure, when the actuating tooth meshes with the drive rack, the compensation motor also stalls, thereby eliminating the gap between the actuating tooth and the drive rack, and the driving device stops rotating at this moment.

In some embodiments of the disclosure, an actuating wheel is provided on the output shaft of the compensation motor, and at least one actuating tooth is circumferentially arranged on the actuating wheel; wherein during normal rotation of the movable disc, the drive rack normally does not contact the actuating wheel

In some embodiments of the disclosure, the drive motor and the compensation motor are circumferentially arranged around the periphery or within the inner bore of the drive rack.

In some embodiments of the disclosure, the drive motor and the compensation motor are installed on the fixed disc, and the drive rack is installed on the movable disc; or the drive motor and the compensation motor are installed on the movable disc, and the drive rack is installed on the fixed disc.

In some embodiments of the disclosure, for the configuration where the drive motor and the compensation motor are installed on the fixed disc and the drive rack is installed on the movable disc, the rotating device further comprises a transmission component that rotates synchronously with the movable disc, and the drive rack is fixed on the transmission component.

In some embodiments of the disclosure, the drive rack is a first arcuate rack or an annular rack.

In some embodiments of the disclosure, the central angle of the first arcuate rack is any angle greater than 0° and less than 360°.

In some embodiments of the disclosure, the central angle of the first arcuate rack is 90°, 180°, or 270°.

In some embodiments of the disclosure, the drive rack is a second arcuate rack, wherein the restraining mechanism comprises first stop structures provided at both ends of the second arcuate rack; wherein the driving device comprises a drive motor and a drive gear fixed on an output shaft of the drive motor; wherein the drive gear meshes with the second arcuate rack and drives the movable disc to rotate relative to the fixed disc; wherein when the drive motor drives the drive rack to rotate to the position of the first stop structures, the drive gear engages with the first stop structures, causing the drive motor to stall.

In some embodiments of the disclosure, the central angle of the second arcuate rack is any angle greater than 0° and less than 360°, wherein the central angle of the second arcuate rack is limited by the first stop structures.

In some embodiments of the disclosure, the central angle of the second arcuate rack is 90°, 180°, or 270°.

In some embodiments of the disclosure, the drive motor is installed on the fixed disc and the second arcuate rack is installed on the movable disc; or the drive motor is installed on the movable disc and the second arcuate rack is installed on the fixed disc.

In some embodiments of the disclosure, for the configuration where the drive motor is installed on the fixed disc and the second arcuate rack is installed on the movable disc, the rotating device further comprises a transmission component that rotates synchronously with the movable disc, and the second arcuate rack is fixed on the transmission component.

In some embodiments of the disclosure, the drive rack is an annular rack, wherein the restraining mechanism comprises a compensation rack, which is fixed together with the drive rack along the same circumference; wherein the drive gear simultaneously meshes with both the drive rack and the compensation rack; wherein the central angle of the compensation rack is any angle greater than 0° and less than 360°; wherein a second stop structure is provided at each end of the compensation rack; wherein when the drive motor drives the drive rack and the compensation rack to rotate to the positions of the second stop structures, the drive gear engages with the second stop structures, causing the drive motor to stall.

In some embodiments of the disclosure, the central angle of the compensation rack is 90°, 180°, or 270°.

In some embodiments of the disclosure, the drive motor is installed on the fixed disc, and the drive rack and the compensation rack are installed on the movable disc; or the drive motor is installed on the movable disc, and the drive rack and the compensation rack are installed on the fixed disc.

In some embodiments of the disclosure, for the configuration where the drive motor is installed on the fixed disc and the drive rack and the compensation rack are installed on the movable disc, the rotating device further comprises a transmission component that rotates synchronously with the movable disc, and the drive rack and the compensation rack are fixed on the transmission component.

In some embodiments of the disclosure, the restraining mechanism comprises thickened portions provided at at least one angular position of the drive rack, wherein third stop structures are provided on the thickened portions; wherein when the drive motor drives the drive rack to rotate to the position of the third stop structures, the drive gear engages with the third stop structures, causing the drive motor to stall.

In some embodiments of the disclosure, the angular position is the 0° position and/or the 270° position.

In some embodiments of the disclosure, the drive motor is installed on the fixed disc and the drive rack is installed on the movable disc; or the drive motor is installed on the movable disc and the drive rack is installed on the fixed disc.

In some embodiments of the disclosure, for the configuration where the drive motor is installed on the fixed disc and the drive rack is installed on the movable disc, the rotating device further comprises a transmission component that rotates synchronously with the movable disc, and the drive rack is fixed on the transmission component.

In some embodiments of the disclosure, the restraining mechanism includes a protruding shaft provided on the output shaft of the drive motor and a transmission component that rotates synchronously with the movable disc; wherein the drive motor is installed on the fixed disc, and the drive rack is installed on the transmission component or the movable disc; wherein a stop slot having a central angle greater than 0° and less than 360° is provided circumferentially on the transmission component, with stop positions respectively provided at both ends of the stop slot; wherein the protruding shaft passes through the stop slot and is movable within the stop slot; wherein when the protruding shaft moves to the stop positions at the ends of the stop slot, the transmission component, the drive rack, and the movable disc are restricted from rotating, causing the drive motor to stall.

In some embodiments of the disclosure, the restraining mechanism includes a protruding shaft provided on the output shaft of the drive motor and a transmission component that rotates synchronously with the movable disc; wherein the drive motor is installed on the fixed disc, and the drive rack is installed on the transmission component or the movable disc; wherein at least one protrusion having a central angle greater than 0° and less than 360° is provided circumferentially on the transmission component, with recessed portions provided either between the two ends of a protrusion or between adjacent protrusions; wherein the protruding shaft extends into the cavity beneath the protrusion and is movable within the cavity; when the protruding shaft moves to the recessed portions at the two ends of the cavity beneath the protrusion, the transmission component, the drive rack, and the movable disc are restricted from rotating, causing the drive motor to stall.

In some embodiments of the disclosure, the top surface of the protruding shaft is lower than the lower side surface of the top portion of the protrusion and higher than the upper side surface of the bottom portion of the recessed portion.

In some embodiments of the disclosure, the central angle of the protrusion is 90°, 180°, or 270°.

In some embodiments of the disclosure, a first arc-shaped weight-reduction slot is formed in the protrusion.

In some embodiments of the disclosure, a second arc-shaped slot is formed in the recessed portion.

In some embodiments of the disclosure, the rotating device further comprises: a locking mechanism installed on the movable disc or the fixed disc; wherein the locking mechanism is capable of locking the movable disc and the fixed disc together at least at one position and restricting rotation of the movable disc relative to the fixed disc, causing the drive motor to stall.

In some embodiments of the disclosure, the rotating device further comprises a transmission component that rotates synchronously with the movable disc; wherein the locking mechanism is installed on the transmission component, the movable disc, or the fixed disc, wherein the locking mechanism is capable of locking the transmission component and/or the movable disc together with the fixed disc at least at one position and restricting rotation of the transmission component and the movable disc relative to the fixed disc, causing the drive motor to stall.

In some embodiments of the disclosure, at least one through-hole is provided on the movable disc or the transmission component, wherein at least one locking hole is provided on the fixed disc, wherein at least one locking pin of the locking mechanism is capable of passing through the through-hole and the locking hole to lock the transmission component and/or the movable disc together with the fixed disc.

In some embodiments of the disclosure, the locking mechanism is installed on any one of the transmission component, the movable disc, and the fixed disc.

In some embodiments of the disclosure, the locking mechanism further comprises: a lock pin bracket fixed on any one of the transmission component, the movable disc, and the fixed disc; wherein at least one locking pin is vertically or horizontally movably arranged on the lock pin bracket.

In some embodiments of the disclosure, the first end of the locking pin, which is to be engaged into the locking hole, is conical to achieve zero-clearance locking.

In some embodiments of the disclosure, the lock pin bracket has a top portion and four side portions, wherein the four side portions are a first side portion, a second side portion, a third side portion, and a fourth side portion; wherein at least one perforated hole is provided at the top portion for allowing the second end, which is opposite to the first end, of the locking pin to pass through.

In some embodiments of the disclosure, the first side portion and the second side portion are formed by bending downward from the first side and the second side of the top portion and are symmetrically located on the first side and the second side of the top portion; wherein the third side portion and the fourth side portion are formed by bending forward from both sides of the second side portion and are welded to the first side portion.

In some embodiments of the disclosure, a noise-damping bushing for the locking pin is installed in the corresponding perforated hole, and the second end of the locking pin passes through the noise-damping bushing for the locking pin.

In some embodiments of the disclosure, the locking mechanism further comprises: an unlocking bracket pivotally arranged on the lock pin bracket, wherein the unlocking bracket is drivingly connected to the locking pin and drives the locking pin to unlock.

In some embodiments of the disclosure, the unlocking bracket is pivotally arranged on the lock pin bracket via an unlocking handle fixing pin.

In some embodiments of the disclosure, two first hinge ears are provided on the unlocking bracket, and a first hinge hole is provided in each first hinge ear.

In some embodiments of the disclosure, a first fixed-pin bushing is installed in each first hinge hole, and both ends of the unlocking handle fixing pin pass through the first fixed-pin bushings respectively.

In some embodiments of the disclosure, two second locking ears are especially symmetrically provided on the first side portion of the lock pin bracket, and a second hinge hole is provided in each second locking ear, wherein both ends of the unlocking handle fixing pin pass through the second hinge holes respectively and are anchored.

In some embodiments of the disclosure, a second fixed-pin bushing is installed in each second hinge hole, and both ends of the unlocking handle fixing pin pass through the second fixed-pin bushings respectively.

In some embodiments of the disclosure, an unlocking portion is provided on the unlocking bracket, and at least one lock pin slot opening is provided on the unlocking portion; wherein a protruding ring is provided at an intermediate position of the corresponding locking pin; wherein the unlocking portion is insertable into the lock pin bracket from the bottom of the first side portion of the lock pin bracket, wherein the corresponding lock pin slot opening on the unlocking portion is snappable beneath the protruding ring on the corresponding locking pin, such that the upper surface of the unlocking portion contacts the lower surface of the protruding ring, and the unlocking bracket actuates the locking pin upward via the protruding ring to unlock.

In some embodiments of the disclosure, a lock pin return spring is sleeved onto the second end of the corresponding locking pin, wherein the lower end of the lock pin return spring abuts against the protruding ring, and the upper end of the lock pin return spring abuts against the lower side of the top portion of the lock pin bracket.

In some embodiments of the disclosure, the rotating device further comprises a lock-mounting bracket, which is installed via fasteners onto any one of the transmission component, the movable disc, and the fixed disc; wherein the bottoms of the first side portion, second side portion, third side portion, and fourth side portion of the lock pin bracket are welded onto the lock-mounting bracket.

In some embodiments of the disclosure, a notch is left between the bottom of the first side portion and the upper surface of the lock-mounting bracket, wherein the unlocking portion is insertable into the lock pin bracket through the notch.

In some embodiments of the disclosure, at least one lock pin hole is provided on the lock-mounting bracket, wherein the lock pin hole is aligned with the through-hole on the movable disc, wherein the first end of the locking pin is able to pass through the lock pin hole and the through-hole.

In some embodiments of the disclosure, an unlocking operation portion is provided on the unlocking bracket, wherein by operating the unlocking operation portion, the unlocking bracket can be actuated to flip, thereby achieving unlocking.

In some embodiments of the disclosure, when the locking mechanism is installed onto any one of the transmission component, the movable disc, and the fixed disc, the locking mechanism can be installed either with the unlocking operation portion oriented toward the outer side of the movable disc or with the unlocking operation portion oriented toward the inner side of the movable disc.

In some embodiments of the disclosure, an unlocking cable lug is provided on the unlocking operation portion, and one end of an unlocking cable is connected to the unlocking cable lug.

In some embodiments of the disclosure, an unlocking pin is installed on the unlocking operation portion, and an unlocking handle is further included; wherein the unlocking handle is pivotally arranged on the movable disc; wherein an unlocking slot is provided on the unlocking handle, and the unlocking slot has an arc-shaped slot edge; wherein the unlocking pin is inserted into the unlocking slot and contacts the arc-shaped slot edge; wherein when the unlocking handle is rotated, the unlocking handle drives the unlocking pin via the arc-shaped slot edge, and actuates the unlocking bracket to unlock.

In some embodiments of the disclosure, ramp surfaces are provided respectively on both sides of the locking hole on the surface of the fixed disc along the rotational direction of the movable disc, with the locking hole located at the horizontal level of the highest position of the ramp surfaces.

In some embodiments of the disclosure, two locking pins are provided, correspondingly two through-holes are provided, and the locking hole is an oblong hole.

In some embodiments of the disclosure, the two locking pins are arranged parallel to each other and can respectively pass through the two through-holes to insert into the locking hole for locking.

In some embodiments of the disclosure, two perforated holes are formed in the top portion.

In some embodiments of the disclosure, two lock pin slot openings are provided side by side on the unlocking portion.

In some embodiments of the disclosure, two lock pin holes are provided side by side on the lock-mounting bracket, and the two lock pin holes are aligned one-to-one with the corresponding through-holes on the movable disc.

In some embodiments of the disclosure, the rotating device includes a transmission component that rotates synchronously with the movable disc; wherein the restraining mechanism includes a protruding shaft provided on the output shaft of the drive motor, a protrusion provided circumferentially on the transmission component, and at least one stopper block provided at any position within the protrusion; wherein the drive motor is installed on the fixed disc, and the drive rack is installed on the transmission component or the movable disc; wherein the protruding shaft extends into the cavity beneath the protrusion and is movable within the cavity; wherein when the protruding shaft moves to the position of the stopper block, the transmission component, the drive rack, and the movable disc are restricted from rotating, causing the drive motor to stall.

In some embodiments of the disclosure, the top surface of the protruding shaft is lower than the lower side surface of the top portion of the protrusion and higher than the bottom surface of the stopper block.

In some embodiments of the disclosure, the stopper block is provided at the 90°, 180°, or 270° position.

A second aspect of the present disclosure relates to a seat comprising the above-described rotating device.

The advantageous effects of the present disclosure lie in:
The rotating device and seat provided by the present disclosure eliminate gap in the gear pair by causing the drive device to stall. Specifically:
(1) By combining, for example, a single-tooth compensation motor and controlling the operating sequence of the compensation motor and the drive motor, stalling of the driving motor is achieved in a clutch-like manner, thereby enabling gap-free locking at any position;
(2) By adding a transmission component and providing stop positions thereon, cooperation with drive motor stalling achieves gap-free locking at end positions;
(3) By providing a locking mechanism capable of locking the movable disc and the fixed disc together, cooperation with drive motor stalling achieves gap-free locking at end positions.

### Brief Description of Drawings

In order to more clearly illustrate the technical solutions in the embodiments of the present disclosure or in the prior art, a brief introduction to the accompanying drawings required for describing the embodiments or the prior art will be provided below.
Figure 1 shows a schematic view illustrating the meshing of the drive motor and the compensation motor with the drive rack according to Embodiment 1 of the present disclosure.
Figure 2 shows an exploded view of the rotating device according to Embodiment 1 of the present disclosure (with the drive rack omitted).
Figure 3 shows an assembled view of the rotating device according to Embodiment 1 of the present disclosure.
Figure 4 shows a schematic view illustrating the drive gear rotating counterclockwise and meshing with the drive rack in the rotating device according to Embodiment 1 of the present disclosure.
Figure 5 shows a schematic view illustrating the drive gear rotating clockwise and meshing with the drive rack in the rotating device according to Embodiment 1 of the present disclosure.
Figure 6 shows a schematic view illustrating the actuating wheel rotating clockwise and contacting the drive rack in the rotating device according to Embodiment 1 of the present disclosure.
Figure 7 shows a schematic view illustrating the actuating wheel rotating counterclockwise and contacting the drive rack in the rotating device according to Embodiment 1 of the present disclosure.
Figure 8 shows a schematic view illustrating the actuating wheel rotating clockwise and meshing with the drive rack to cause stall in the rotating device according to Embodiment 1 of the present disclosure.
Figure 9 shows a schematic view illustrating the actuating wheel rotating counterclockwise and meshing with the drive rack to cause stall in the rotating device according to Embodiment 1 of the present disclosure.
Figure 10 shows an overall schematic view of the rotating device according to Embodiment 2 of the present disclosure.
Figure 11 shows an exploded view of the rotating device according to Embodiment 2 of the present disclosure.
Figure 12 shows a schematic view illustrating the installation of the drive rack onto the transmission bracket in the rotating device according to Embodiment 2 of the present disclosure.
Figure 13 shows an overall schematic view of the rotating device according to Embodiment 3 of the present disclosure.
Figure 14 shows an exploded view of the rotating device according to Embodiment 3 of the present disclosure.
Figure 15 shows a schematic view illustrating the structure and installation of the arcuate rack in the rotating device according to Embodiment 3 of the present disclosure.
Figure 16 shows a schematic view illustrating the drive gear of the rotating device in Embodiment 3 of the present disclosure rotating counterclockwise and becoming stalled after engaging with the stop structure on the arcuate rack.
Figure 17 shows a schematic view illustrating the drive gear of the rotating device in Embodiment 3 of the present disclosure rotating clockwise and becoming stalled after engaging with the stop structure on the arcuate rack.
Figure 18 shows an overall schematic view of the rotating device according to Embodiment 4 of the present disclosure.
Figure 19 shows an exploded view of the rotating device according to Embodiment 4 of the present disclosure.
Figure 20 shows a schematic view illustrating the structure and installation of the arcuate rack in the rotating device according to Embodiment 4 of the present disclosure.
Figure 21 shows a schematic view illustrating the drive gear of the rotating device in Embodiment 4 of the present disclosure rotating counterclockwise and becoming stalled after engaging with the stop structure on the arcuate rack.
Figure 22 shows a schematic view illustrating the drive gear of the rotating device in Embodiment 4 of the present disclosure rotating clockwise and becoming stalled after engaging with the stop structure on the arcuate rack.
Figure 23 shows an overall schematic view of the rotating device according to Embodiment 5 of the present disclosure.
Figure 24 shows an exploded view of the rotating device according to Embodiment 5 of the present disclosure.
Figure 25 shows a schematic view illustrating the installation of the compensation rack and the annular rack onto the transition bracket in the rotating device according to Embodiment 5 of the present disclosure.
Figure 26 shows a schematic view illustrating the drive gear of the rotating device in Embodiment 5 of the present disclosure rotating counterclockwise and becoming stalled after engaging with the stop structure on the arcuate rack.
Figure 27 shows a schematic view illustrating the drive gear of the rotating device in Embodiment 4 of the present disclosure rotating clockwise and becoming stalled after engaging with the stop structure on the arcuate rack.
Figure 28 shows an overall schematic view of the rotating device according to Embodiment 6 of the present disclosure.
Figure 29 shows an exploded view of the rotating device according to Embodiment 6 of the present disclosure.

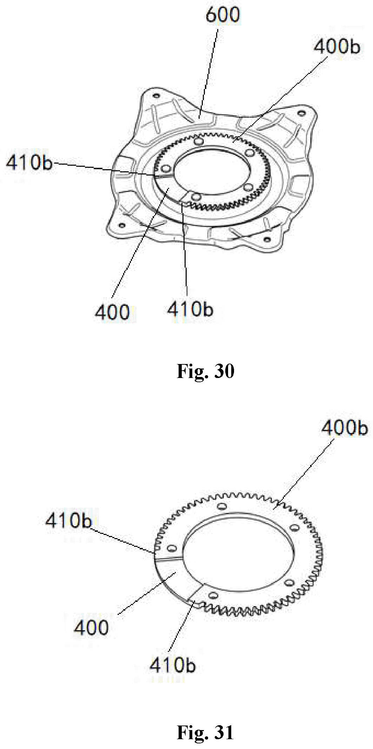

Figure 30 shows a schematic view illustrating the installation of the annular rack and the compensation rack onto the transmission bracket in the rotating device according to Embodiment 6 of the present disclosure.
Figure 31 shows a schematic view illustrating the combination and installation of the compensation rack and the annular rack in the rotating device according to Embodiment 6 of the present disclosure.
Figure 32 shows a schematic view illustrating the drive gear of the rotating device in Embodiment 6 of the present disclosure rotating counterclockwise and becoming stalled after engaging with the stop structure on the arcuate rack.
Figure 33 shows a schematic view illustrating the drive gear of the rotating device in Embodiment 6 of the present disclosure rotating clockwise and becoming stalled after engaging with the stop structure on the arcuate rack.
Figure 34 shows an overall schematic view of the rotating device according to Embodiment 7 of the present disclosure.
Figure 35 shows an exploded view of the rotating device according to Embodiment 7 of the present disclosure.
Figure 36 shows a schematic view illustrating the structure and installation of the annular rack in the rotating device according to Embodiment 7 of the present disclosure.
Figure 37 shows a schematic view illustrating the drive gear of the rotating device in Embodiment 7 of the present disclosure rotating counterclockwise and becoming stalled after engaging with the stop structure on the thickened portion of the arcuate rack.
Figure 38 shows a schematic view illustrating the drive gear of the rotating device in Embodiment 7 of the present disclosure rotating clockwise and becoming stalled after engaging with the stop structure on the thickened portion of the arcuate rack.
Figure 39 shows an overall schematic view of the rotating device according to Embodiment 8 of the present disclosure.
Figure 40 shows an exploded view of the rotating device according to Embodiment 8 of the present disclosure.
Figure 41 shows a schematic view illustrating the structure and installation of the annular rack in the rotating device according to Embodiment 8 of the present disclosure.
Figure 42 shows a schematic view illustrating the drive gear of the rotating device in Embodiment 8 of the present disclosure rotating counterclockwise and becoming stalled after engaging with the stop structure on the thickened portion of the arcuate rack.
Figure 43 shows a schematic view illustrating the drive gear of the rotating device in Embodiment 8 of the present disclosure rotating clockwise and becoming stalled after engaging with the stop structure on the thickened portion of the arcuate rack.
Figure 44 shows an overall schematic view of the rotating device according to Embodiment 9 of the present disclosure.
Figure 45 shows an exploded view of the rotating device according to Embodiment 9 of the present disclosure.
Figure 46 shows a schematic view illustrating the assembly of the drive motor, the movable disc, and the fixed disc in the rotating device according to Embodiment 9 of the present disclosure.
Figure 47 shows a schematic view illustrating the installation of the annular rack onto the transmission bracket in the rotating device according to Embodiment 9 of the present disclosure.
Figure 48 shows a schematic view illustrating the movable disc in the rotating device of Embodiment 9 of the present disclosure moving counterclockwise until the protruding shaft contacts the stop position at one end of the stop slot, causing the movable disc to halt and resulting in a stall of the drive motor.
Figure 49 shows a schematic view illustrating the movable disc in the rotating device of Embodiment 9 of the present disclosure moving clockwise until the protruding shaft contacts the stop position at the other end of the stop slot, causing the movable disc to halt and resulting in a stall of the drive motor.
Figure 50 shows an overall schematic view of the rotating device according to Embodiment 10 of the present disclosure.
Figure 51 shows an exploded view of the rotating device according to Embodiment 10 of the present disclosure.
Figure 52 shows a schematic view illustrating the installation of the annular rack onto the transmission bracket in the rotating device according to Embodiment 10 of the present disclosure.
Figure 53 shows a structural schematic view of the transmission bracket in the rotating device according to Embodiment 10 of the present disclosure.
Figure 54 shows a schematic diagram illustrating the movable disc in the rotating device of Embodiment 10 of the present disclosure moving clockwise until the protruding shaft contacts the recessed portion, causing the movable disc to stop and resulting in a stall of the drive motor.
Figure 55 shows an overall schematic view of the rotating device according to Embodiment 11 of the present disclosure.
Figure 56 shows an exploded view of the rotating device according to Embodiment 11 of the present disclosure.
Figure 57 shows a schematic view illustrating the installation of the annular rack onto the transmission bracket in the rotating device according to Embodiment 11 of the present disclosure.
Figure 58 shows a schematic diagram illustrating the movable disc in the rotating device of Embodiment 11 of the present disclosure moving clockwise until the protruding shaft contacts the recessed portion, causing the movable disc to stop and resulting in a stall of the drive motor.
Figure 59 shows an overall schematic view of the rotating device according to Embodiment 12 of the present disclosure.
Figure 60 shows an exploded view of the rotating device according to Embodiment 12 of the present disclosure.
Figure 61 shows a schematic view illustrating the installation of the annular rack onto the transmission bracket in the rotating device according to Embodiment 12 of the present disclosure.
Figure 62 shows a schematic diagram illustrating the movable disc in the rotating device of Embodiment 13 of the present disclosure moving clockwise until the protruding shaft contacts the recessed portion, causing the movable disc to stop and resulting in a stall of the drive motor.
Figure 63 shows an exploded schematic view of the locking mechanism according to Embodiment 14 of the present disclosure.
Figure 64 shows a structural schematic view of the locking pin bracket in the locking mechanism according to Embodiment 14 of the present disclosure.
Figure 65 shows a structural schematic view of the locking mechanism according to Embodiment 14 of the present disclosure.
Figure 66 shows a schematic view illustrating the assembly process of the locking mechanism according to Embodiment 14 of the present disclosure.
Figure 67 shows a schematic view illustrating the first installation method of the locking mechanism onto the movable disc according to Embodiment 14 of the present disclosure.
Figure 68 shows a schematic view illustrating the state after installing the locking mechanism onto the movable disc using the first installation method according to Embodiment 14 of the present disclosure.
Figure 69 shows an enlarged view of portion I in Figure 68.
Figure 70 shows a schematic view illustrating the second installation method of the locking mechanism onto the movable disc according to Embodiment 14 of the present disclosure.
Figure 71 shows a schematic view illustrating the state after installing the locking mechanism onto the movable disc using the second installation method according to Embodiment 14 of the present disclosure.
Figure 72 shows an enlarged view of portion I in Figure 71.
Figures 73a to 73d show schematic views illustrating the locking process of the locking pins according to Embodiment 14 of the present disclosure.
Figures 74a to 74g show schematic views illustrating the transition process between locking and unlocking of the vertical-pin locking mechanism for a rotating seat according to Embodiment 14 of the present disclosure.
Figure 75 shows a structural schematic view of the locking mechanism according to Embodiment 15 of the present disclosure.
Figure 76 shows an exploded schematic view of the locking mechanism according to Embodiment 15 of the present disclosure.
Figures 77a to 77f show schematic views illustrating the transition process between locking and unlocking of the locking mechanism according to Embodiment 15 of the present disclosure.
Figures 78a to 78i show schematic views illustrating the transition process between locking and unlocking of the locking mechanism according to Embodiment 16 of the present disclosure.
Figure 79 shows an assembled schematic view of the rotating device according to Embodiment 17 of the present disclosure.
Figure 80 shows an exploded schematic view of the rotating device according to Embodiment 17 of the present disclosure.

### Detailed Description of Drawings

In the description of the present disclosure, it should be noted that directional or positional terms such as "upper," "lower," "left," "right," "inner," and "outer" refer to orientations or positional relationships based on those shown in the accompanying drawings. Terms such as "longitudinal (X-direction)," "lateral (Y-direction)," and "vertical (Z-direction)" are spatial coordinate system terms commonly used in the automotive field and are well-known professional terminology to those skilled in the art. The above descriptions are provided for the convenience of describing the present disclosure in a simplified manner and are not intended to indicate or imply that the described device or element must have a specific orientation, be constructed in a specific orientation, or be operated in a specific orientation; thus, they should not be construed as limiting the present disclosure.

The inventive concept of the present disclosure constitutes a further improvement over existing rotating devices. Existing rotating devices include a fixed disc and a movable disc, wherein the movable disc is rotatably provided on the fixed disc via rolling elements (not shown in the figures of the following embodiments but well known to those skilled in the art).

Such rotating devices are typically used for seat rotation within vehicles. When used for seat rotation, the fixed disc is usually fixedly installed onto the vehicle floor, while the movable disc is fixedly connected to the seat, thereby enabling the seat to rotate.

Rotation of the seat by the movable disc can be driven by a drive device. The drive device may be manual or electric. The present disclosure primarily focuses on improvements to rotating devices equipped with electric drive devices and does not consider manual drive devices.

The electric drive device can drive the movable disc together with the seat to rotate between 0° and 360° and stop at any arbitrary position-for example, at 90°, 180°, 270°, or 360°-or, of course, at positions other than these angles, as required.

For the rotating device of the present disclosure, since it is used for seat rotation within a vehicle, its electric drive device typically includes a drive motor and a gear pair. The gear pair usually comprises a drive rack fixed on either the movable disc or the fixed disc, and a drive gear fixed on the output shaft of the drive motor. If the drive rack is fixed on the movable disc, the drive motor is installed on the fixed disc; if the drive rack is fixed on the fixed disc, the drive motor is installed on the movable disc. However, the preferred embodiments described below all adopt the configuration where the drive rack is fixed on the movable disc and the drive motor is installed on the fixed disc, although configurations wherein the drive rack is fixed on the fixed disc and the drive motor is installed on the movable disc are not excluded.

Regardless of the configuration, when the drive motor is energized and operates, it actuates the drive gear to rotate; the drive gear, through meshing with the drive rack, actuates the drive rack to rotate; the rotating drive rack actuates the movable disc to rotate; and the movable disc actuates the seat to rotate.

The above description represents currently employed technical solutions. However, the aforementioned prior art has a problem: after the drive motor is de-energized and stops operating-that is, after the drive motor drives the movable disc together with the seat to rotate between 0° and 360° and stop at any arbitrary position-a gap typically exists between the teeth of the drive gear and the teeth of the drive rack. During the vehicle's driving process, this gap will cause seat shaking, causing noise and affecting riding comfort. This disclosure improves upon the aforementioned prior art, and its disclosed feature is the addition of at least one restraining mechanism configured to restrict rotation of the movable disc, wherein when the driving device drives the movable disc to stop at any position, the restraining mechanism is capable of restricting rotation of the movable disc, causing the driving device to stall, so as to eliminate the gap between the teeth of the drive gear and the teeth of the drive rack.

The exemplary embodiments of the present application embodying the above inventive concept will be described in detail below with reference to the accompanying drawings. It should be understood, however, that the present application may be embodied in many different forms and is not limited to the embodiments described herein. It should also be understood that the disclosed embodiments may be combined in various ways to provide more additional embodiments. Throughout all drawings, identical reference numerals denote identical or functionally identical elements.

### Embodiment 1

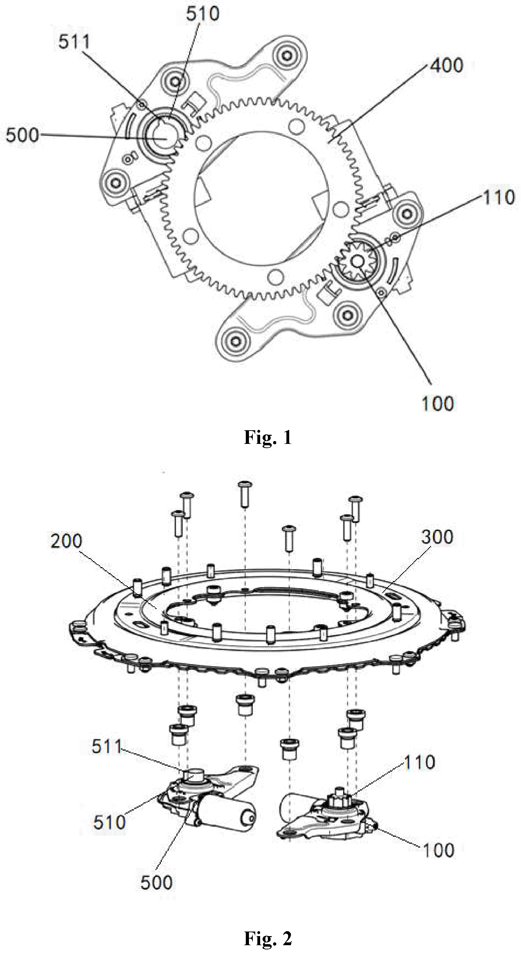

Referring to Figures 1 to 9, the rotating device of this embodiment includes a drive motor 100, which is fixedly installed on a fixed disc 200. The gear pair includes a drive rack fixed on a movable disc 300 and a drive gear 110 fixed on the output shaft of the drive motor 100. The drive gear 110 meshes with the drive rack and drives the movable disc 300 to rotate relative to the fixed disc 200.

In this embodiment, the drive rack is an annular rack 400, enabling 360-degree rotation. Of course, depending on the rotation angle, the annular rack 400 may alternatively be an arcuate rack (the aforementioned first arcuate rack), with a central angle greater than 0° and less than 360°, for example, 90°, 180°, or 270°, or any other angle besides these, as required.

The restraining mechanism of this embodiment includes a compensation motor 500 and an actuating wheel 510 fixed on the output shaft of the compensation motor 500. The compensation motor 500 is also fixedly installed on the fixed disc 200. At least one actuating tooth 511 is arranged circumferentially on the actuating wheel 510 (the number of actuating tooths 511 may be determined as needed and is not limited to one).

The annular rack 400 may be an external-tooth structure or an internal-tooth structure. When the annular rack 400 is an external-tooth structure, the drive motor 100 and the compensation motor 500 are circumferentially arranged around the periphery of the annular rack 400; when the annular rack 400 is an internal-tooth structure, the drive motor 100 and the compensation motor 500 are circumferentially arranged within the inner bore of the annular rack 400. The preferred embodiment employs an external-tooth annular rack 400, with the drive motor 100 and the compensation motor 500 arranged around its periphery.

The angle between the lines connecting the rotational centers of the respective gears of the drive motor 100 and the compensation motor 500 to the center of the movable disc 300 can be selected within a range greater than 0° and less than 360°. For example, the drive motor 100 and the compensation motor 500 may be arranged on the same side or on different sides around the periphery of the annular rack 400, as required. Preferably, the compensation motor 500 and the drive motor 100 are symmetrically arranged, so that the annular rack 400 can be loaded from both sides.

In this embodiment, the drive motor 100 and the compensation motor 500 are installed on the fixed disc 200, and the annular rack 400 is installed on the movable disc 300 (of course, the drive motor 100 and the compensation motor 500 could be installed on the movable disc 300, and the annular rack 400 installed on the fixed disc 200).

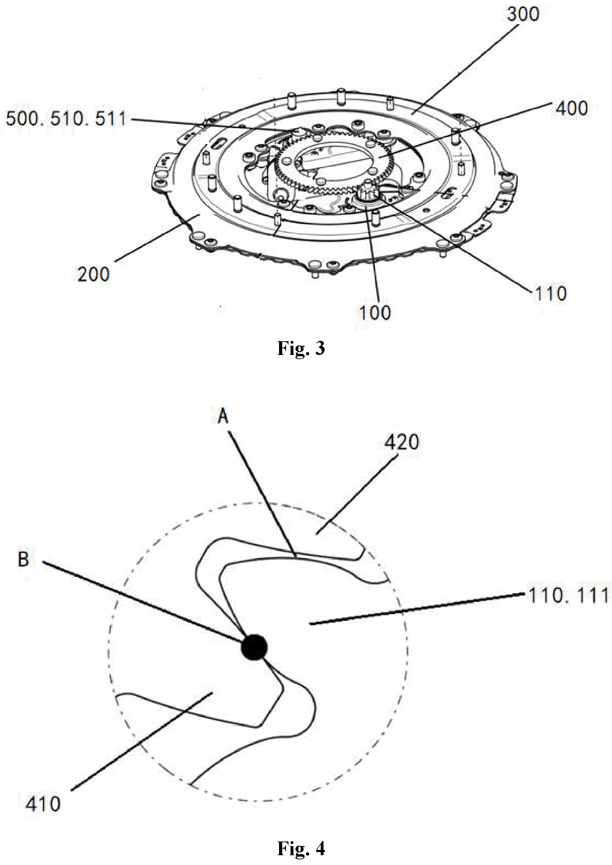

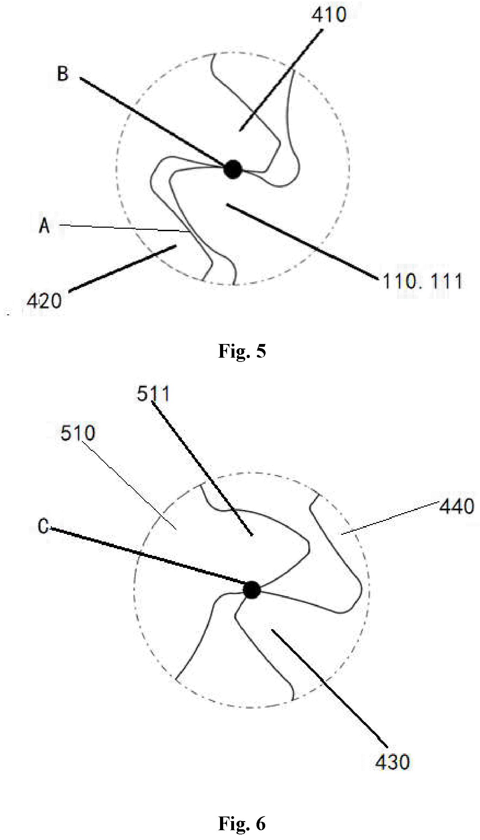

Referring particularly to Figures 4 and 5, when the drive motor 100 switches from normal rotation to stoppage, there must be a gap A on either side between a tooth 111 on the drive gear 110 and two adjacent teeth 410, 420 on the annular rack 400, allowing the annular rack 400 to undergo further slight rotation. The location of this gap A depends on the contact point B between the tooth 111 on the drive gear 110 and the tooth 410 or 420 on either side of the annular rack 400.

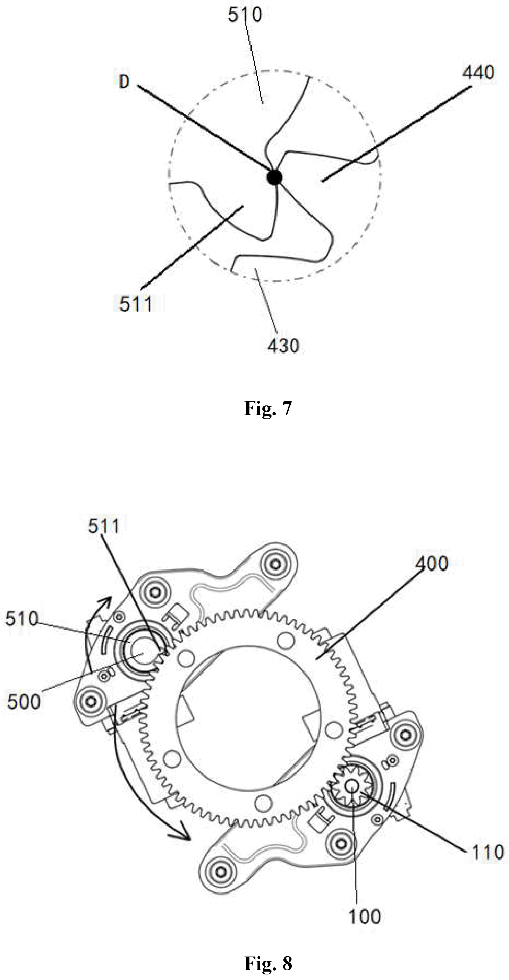

Referring to Figures 6 and 8, during normal rotation of the annular rack 400 driven by the drive gear 110, the annular rack 400 normally does not contact the actuating wheel 510. After the drive motor 100 switches from an energized rotating state to a de-energized stopped state (as shown in Figures 4 and 5)-that is, when the movable disc 300 brings the seat to a stop at any arbitrary angle-the seat control system energizes the compensation motor 500 to drive the actuating wheel 510 to rotate clockwise. As shown in Figure 6, the actuating tooth 511 on the actuating wheel 510 is clockwise inserted between two adjacent teeth 430, 440 of the annular rack 400 and contacts one tooth 430 of the annular rack 400 at contact point C, pushing the annular rack 400 to rotate counterclockwise, thereby causing the tooth 111 on the drive gear 110 to be pushed by one tooth 410 on the annular rack 400 and resulting in stall (self-locking of the drive motor 100). When the control module in the seat control system detects that the current of the compensation motor 500 reaches a specified value, the actuating tooth 511 on the actuating wheel 510 actually contacts the one tooth 430 of the annular rack 400 at contact point C, eliminating the gap between the actuating tooth 511 and the one tooth 430 of the annular rack 400. The compensation motor 500 then de-energizes and self-locks, thereby forming a bidirectional stop structure in the transmission path among the compensation motor 500, the annular rack 400, and the drive motor 100 to eliminate wobbling gap.

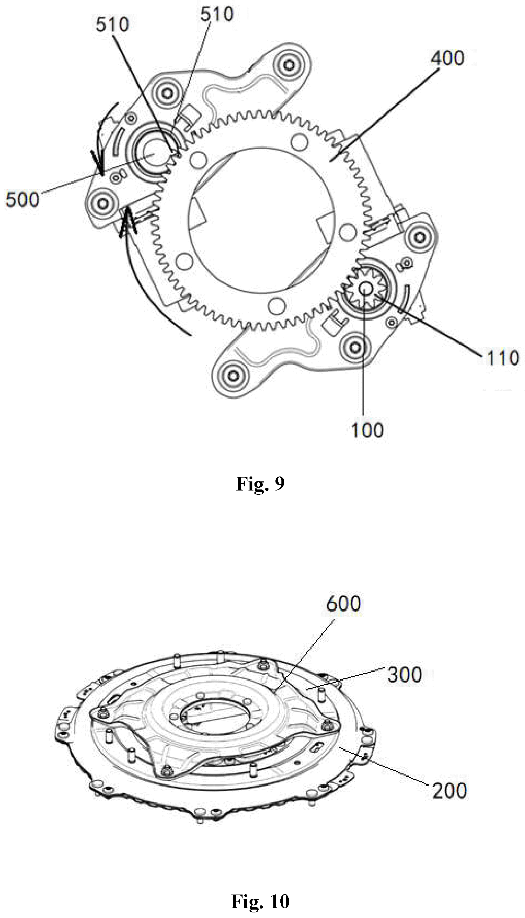

Similarly, referring to Figures 7 and 9, the compensation motor 500 may rotate in the opposite (counterclockwise) direction, causing the actuating tooth 511 on the actuating wheel 510 to actually contact another tooth 440 of the annular rack 400 at contact point D, eliminating the gap between the actuating tooth 511 and the another tooth 440, while simultaneously driving the annular rack 400 to rotate clockwise so that the tooth 111 on the drive gear 110 contacts another tooth 420 of the annular rack 400, causing the drive motor 100 to stall. At this moment, the compensation motor 500 also stalls.

The compensation motor 500 engages with the annular rack 400 only via an independent actuating tooth 511. Since the compensation motor 500 also has a self-locking function, when the annular rack 400 (i.e., the movable disc 300) needs to be normally driven by the drive motor 100, the compensation motor 500 is energized and first drives the actuating wheel 510 to rotate in the reverse direction, causing the actuating tooth 511 to disengage from the meshing state, move away from the annular rack 400, and de-energize after the stalled condition is released; thereafter, energize the drive motor 100 to drive the annular rack 400 to rotate..

Thus, through the above dual-motor structure, the annular rack 400-and hence the movable disc 300-can achieve full-circle rotation and gap-free locking at any arbitrary position.

### Embodiment 2

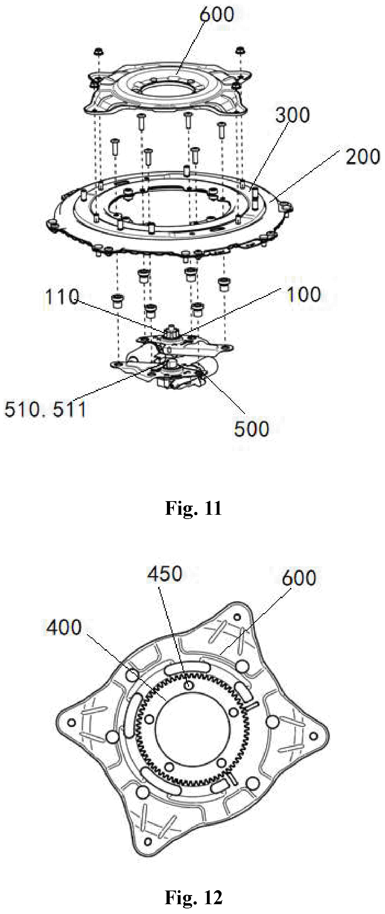

This embodiment differs from Embodiment 1 in that, referring to Figures 10 to 12, it further includes a transmission bracket 600 that rotates synchronously with the annular rack 400 (i.e., the movable disc 300). The annular rack 400 is fixed on the transmission bracket 600 via fasteners 450. The drive motor 100 and the compensation motor 500 are installed on the fixed disc 200. Of course, alternatively, the drive motor 110 and the compensation motor 500 could be installed on the transmission bracket 600, with the annular rack 400 installed on the fixed disc 200. The remaining parts of this embodiment is identical to Embodiment 1.

### Embodiment 3

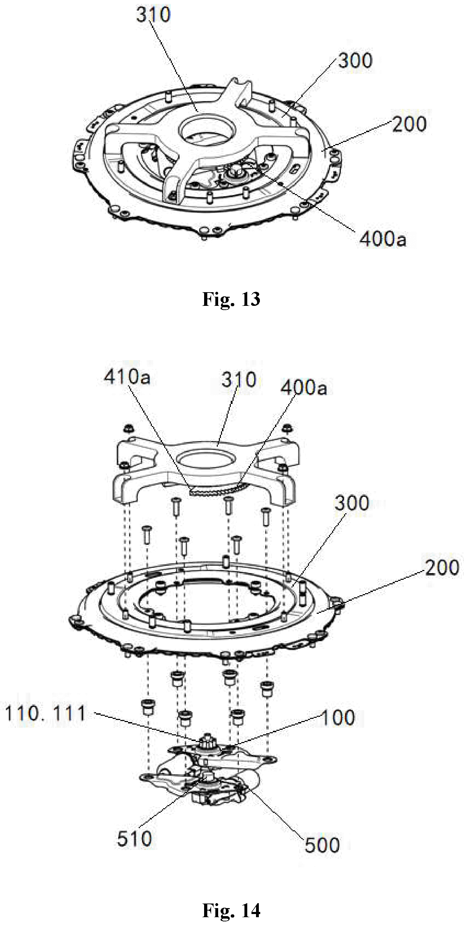

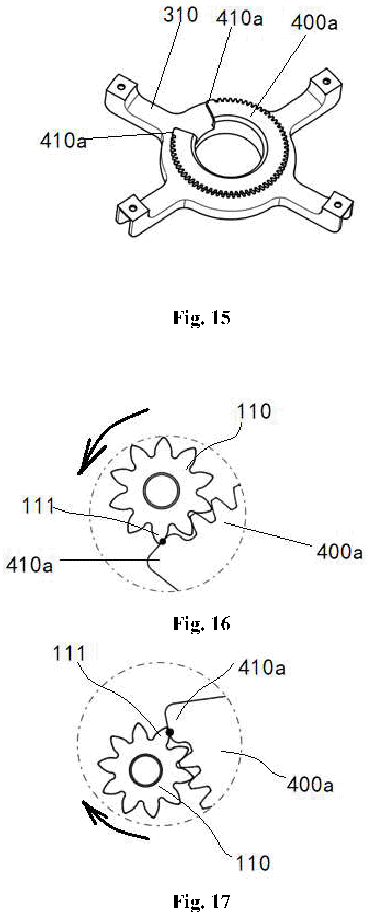

This embodiment differs from Embodiment 1 in that, referring to Figures 13 to 17, the drive rack is an arcuate rack 400a (the aforementioned second arcuate rack). The restraining mechanism further includes stop structures 410a provided at both ends of the arcuate rack 400a. The drive device also includes the drive motor 100 and the drive gear 110 fixed on the output shaft of the drive motor 100. The drive gear 110 meshes with the arcuate rack 400a and drives the movable disc 300 to rotate relative to the fixed disc 200. When the drive motor 100 drives the arcuate rack 400a via the drive gear 110 to the position of the stop structures 410a and then de-energizes to stop, any tooth 111 of the drive gear 110 engages with the stop structure 410a, causing the drive motor 100 to stall, so as to eliminate the gap between the tooth 111 on the drive gear 110 and the stop structure 410a on the arcuate rack 400a.

The central angle of the arcuate rack 400a in this embodiment is any angle greater than 0° and less than 360°, for example, 90°, 180°, or 270°. The central angle of this arcuate rack 400a is also limited by the corresponding stop structures-that is, the positions of the stop structures will affect the range of the central angle of the arcuate rack 400a.

The arcuate rack 400a in this embodiment is fixed on a transition bracket 310 that rotates together with the movable disc 300. In the present disclosure, both the transmission bracket and the transition bracket may be understood as transmission components.

This embodiment may retain the compensation motor 500 and the actuating wheel 510, allowing the moving disc 300 to stop at any angle with a central angle greater than 0° and less than 360°, as in Embodiment 1. Alternatively, the compensation motor 500 may be omitted, such that the moving disc 300 stops only at the stop structures 410a located at the two ends of the arcuate rack 400a, causing the drive motor 100 to stall so as to eliminate the gap between the tooth 111 on the drive gear 110 and the stop structure 410a on the arcuate rack 400a.

The remaining parts of this embodiment that are not described herein are the same as those in Embodiment 1.

### Embodiment 4

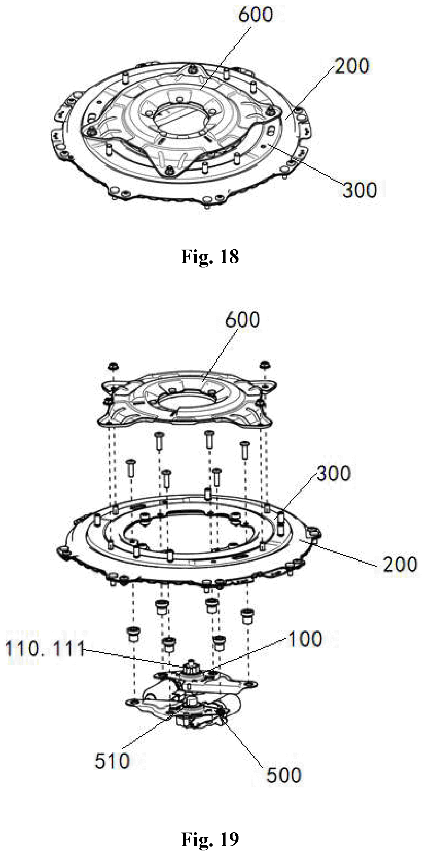

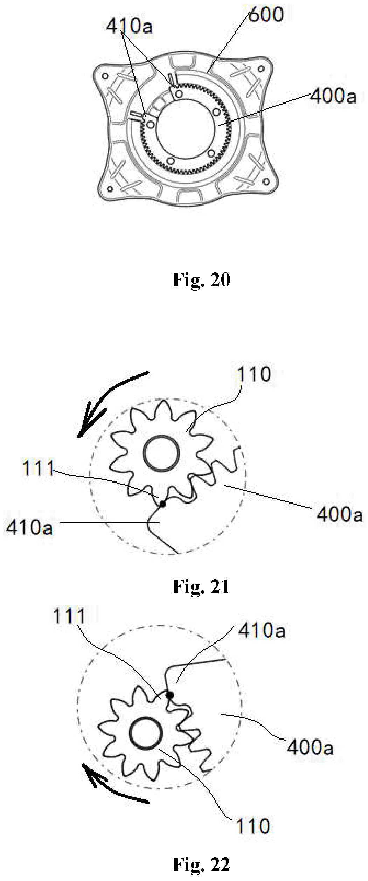

This embodiment differs from Embodiment 2 in that, referring to Figures 18 to 22, the drive rack is an arcuate rack 400a (the aforementioned second arcuate rack). The restraining mechanism further includes stop structures 410a provided at both ends of the arcuate rack 400a. The drive device also includes the drive motor 100 and the drive gear 110 fixed on the output shaft of the drive motor 100. The drive gear 110 meshes with the arcuate rack 400a and drives the movable disc 300 to rotate relative to the fixed disc 200. When the drive motor 100 drives the arcuate rack 400a via the drive gear 110 to the position of the stop structures 410a and then de-energizes to stop, any tooth 111 on the drive gear 110 engages with the stop structure 410a, causing the drive motor 100 to stall, so as to eliminate the gap between the tooth 111 on the drive gear 110 and the stop structure 410a on the arcuate rack 400a.

The central angle of the arcuate rack 400a in this embodiment is any angle greater than 0° and less than 360°, for example, 90°, 180°, or 270°. Similarly, the central angle of this arcuate rack 400a is also limited by the corresponding stop structures-that is, the positions of the stop structures affect the range of the central angle of the arcuate rack 400a.

The arcuate rack 400a is fixed on the transmission bracket 600.

This embodiment may retain the compensation motor 500 and the actuating wheel 510, enabling the movable disc 300 to stop at any angle within a central angle greater than 0° and less than 360°, as in Embodiment 2. Alternatively, the compensation motor 500 may be omitted, allowing the movable disc 300 to stop only at the stop structures 410a at the two ends of the arcuate rack 400a, causing the drive motor 100 to stall, so as to eliminate the gap between the tooth 111 on the drive gear 110 and the stop structure 410a on the arcuate rack 400a.

The remaining parts of this embodiment that are not described herein are the same as those in Embodiment 2.

### Embodiment 5

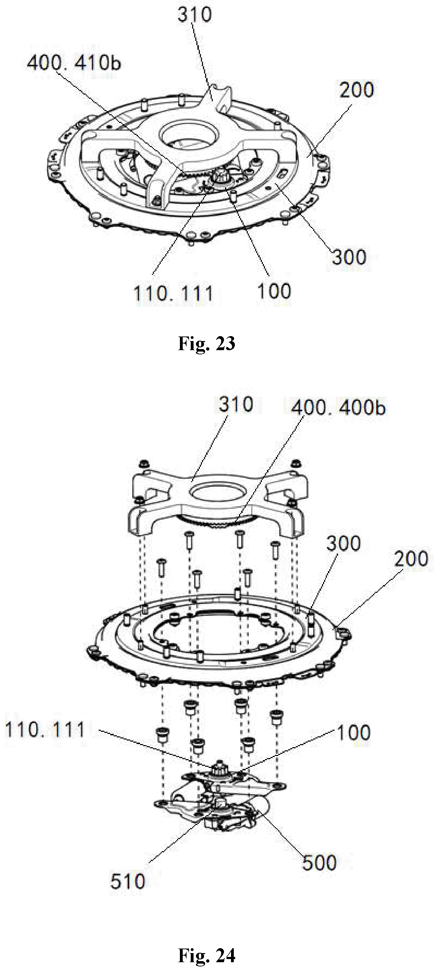

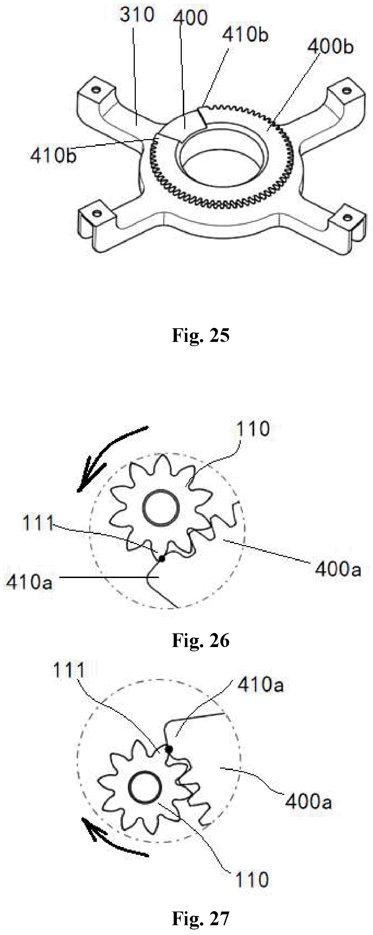

This embodiment differs from Embodiment 1 in that, referring to Figures 23 and 27, while retaining the annular rack 400, the restraining mechanism further includes a compensation rack 400b. The compensation rack 400b is fixed together with the annular rack 400 and fixed onto a transition bracket 310 that rotates with the movable disc 300. The drive gear 110 meshes simultaneously with both the annular rack 400 and the compensation rack 400b. The compensation rack 400b is also an arcuate rack. The central angle of the compensation rack 400b is any angle greater than 0° and less than 360°, for example, 90°, 180°, or 270°.

A stop structure 410b is respectively provided at each end of the compensation rack 400b. When the drive motor 100 drives the annular rack 400 and the arcuate compensation rack 400b via the drive gear 110 to the position of the stop structures 410b, the drive gear 110 engages with the stop structure 410b, causing the drive motor 120 to stall, so as to eliminate both the gap between the tooth 111 on the drive gear 110 and the annular rack 400, and the gap between the tooth 111 on the drive gear 110 and the stop structure 410b on the arcuate compensation rack 400b.

This embodiment may retain the compensation motor 500 and the actuating wheel 510, enabling the movable disc 300 to stop at any angle with a central angle greater than 0° and less than 360°, as in Embodiment 1. Alternatively, the compensation motor 500 may be omitted, allowing the movable disc 300 to stop only at the stop structures 410b at the two ends of the compensation rack 400b, causing the drive motor 100 to stall, so as to eliminate both the gap between the tooth 111 on the drive gear 110 and the annular rack 400, and the gap between the tooth 111 on the drive gear 110 and the stop structure 410b on the arcuate compensation rack 400b.

An additional advantage of this embodiment is that, for existing rotating devices equipped with an annular rack 400, when it is necessary to stop the movable disc 300 at a specific angle, there is no need to replace the annular rack 400 with an arcuate rack; instead, a compensation rack 400b can simply be added onto the annular rack 400, saving replacement time and reducing parts inventory.

The remaining parts of this embodiment that are not described herein are the same as those in Embodiment 1.

### Embodiment 6

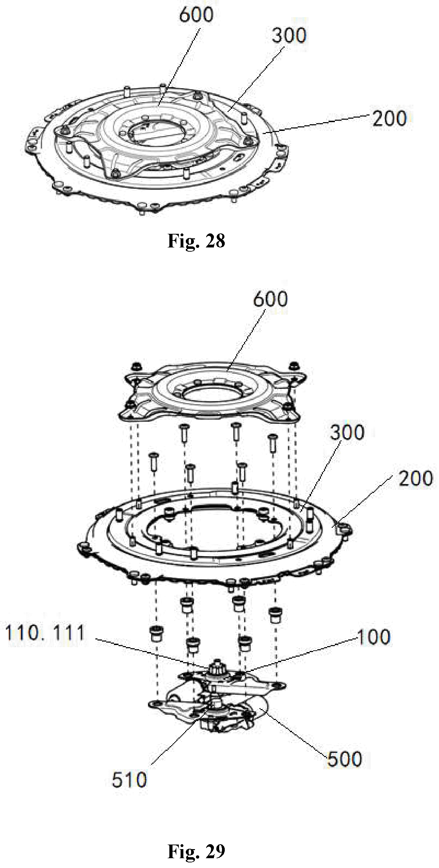

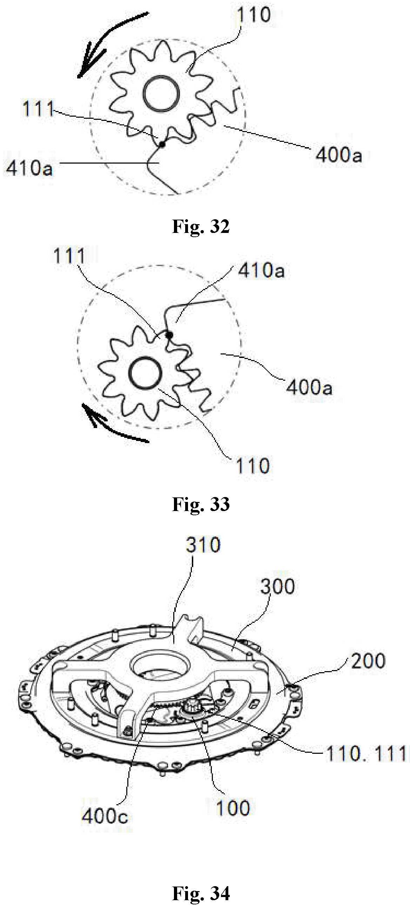

This embodiment differs from Embodiment 2 in that, referring to Figures 28 and 33, while retaining the annular rack 400, the restraining mechanism further includes a compensation rack 400b. The compensation rack 400b is fixed together with the annular rack 400 and fixed onto the transmission bracket 600. The drive gear 110 meshes simultaneously with both the annular rack 400 and the compensation rack 400b. The compensation rack 400b is also an arcuate rack. The central angle of the compensation rack 400b is any angle greater than 0° and less than 360°, for example, 90°, 180°, or 270°.

A stop structure 410b is respectively provided at each end of the compensation rack 400b. When the drive motor 100 drives the annular rack 400 and the arcuate compensation rack 400b via the drive gear 110 to the position of the stop structures 410b, the drive gear 110 engages with the stop structure 410b, causing the drive motor 100 to stall, so as to eliminate both the gap between the tooth 111 on the drive gear 110 and the annular rack 400, and the gap between the tooth 111 on the drive gear 110 and the stop structure 410b on the arcuate compensation rack 400b.

This embodiment may retain the compensation motor 500 and the actuating wheel 510, enabling the movable disc 300 to stop at any angle within a central angle greater than 0° and less than 360°, as in Embodiment 2. Alternatively, the compensation motor 500 may be omitted, allowing the movable disc 300 to stop only at the stop structures 410b at the two ends of the compensation rack 400b, causing the drive motor 100 to stall, so as to eliminate both the gap between the tooth 111 on the drive gear 110 and the annular rack 400, and the gap between the tooth 111 on the drive gear 110 and the stop structure 410b on the arcuate compensation rack 400b.

An additional advantage of this embodiment is that, for existing rotating devices equipped with an annular rack 400, when it is necessary to stop the movable disc 300 at a specific angle, there is no need to replace the annular rack 400 with an arcuate rack; instead, a compensation rack 400b can simply be added onto the annular rack 400, saving replacement time and reducing parts inventory.

The remaining parts of this embodiment that are not described herein are the same as those in Embodiment 2.

### Embodiment 7

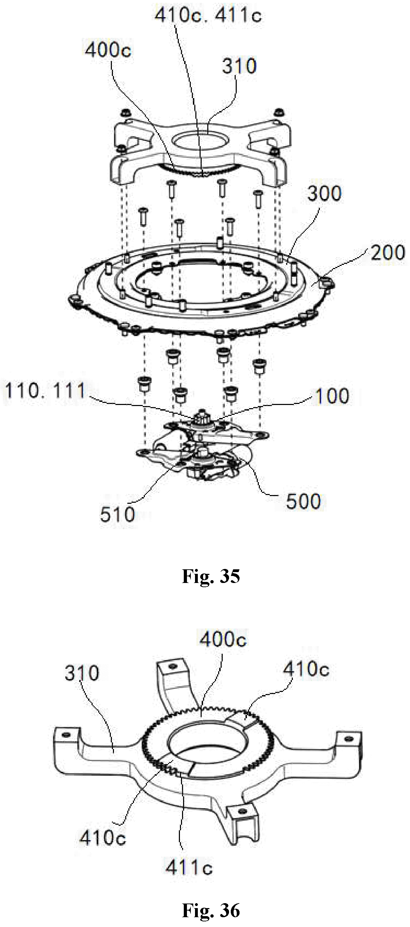

This embodiment differs from Embodiment 1 in that, referring to Figures 34 to 38, the restraining mechanism further includes a thickened portion 410c provided at at least one arbitrary angular position-e.g., at the 0° position and/or the 270° position-of the annular rack 400c. A stop structure 411c is provided on the thickened portion 410c-for example, the overall thickness of the annular rack 400c is 3 mm, and the thickened portion 410c is 6 mm.

The annular rack 400c of this embodiment is fixed on a transition bracket 310 that rotates with the movable disc 300.

When the drive motor 100 drives the annular rack 400c via the drive gear 110 to the position of the stop structure 411c, the drive gear 110 engages with the stop structure 411c, causing the drive motor 100 to stall, so as to eliminate the gap between the tooth 111 on the drive gear 110 and the stop structure 411c.

This embodiment may retain the compensation motor 500 and the actuating wheel 510, enabling the movable disc 300 to stop at any angle within a central angle greater than 0° and less than 360°, as in Embodiment 1. Alternatively, the compensation motor 500 may be omitted, allowing the movable disc 300 to stop only at the stop structure 411c, causing the drive motor 100 to stall, so as to eliminate the gap between the tooth 111 on the drive gear 110 and the stop structure 411c.

An additional advantage of this embodiment is that, for existing rotating devices equipped with an annular rack 400c, when it is necessary to stop the movable disc 300 at a specific angle, there is no need to replace the annular rack 400c with an arcuate rack; instead, a thickened portion 410c can simply be added onto the annular rack 400c, saving replacement time and reducing parts inventory.

### Embodiment 8

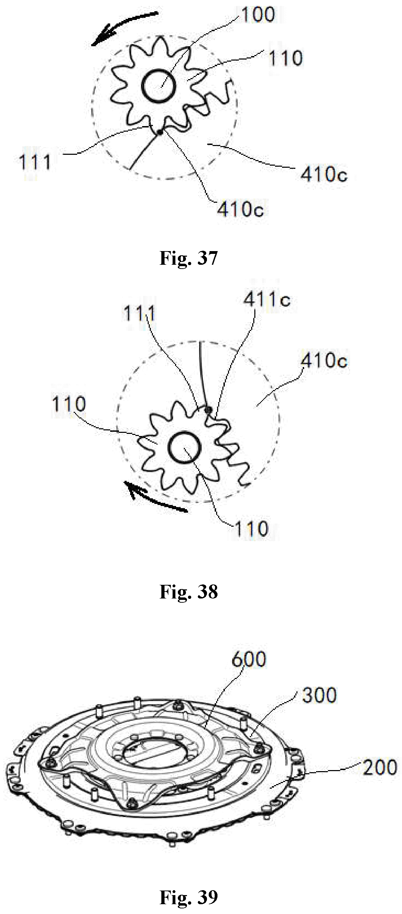

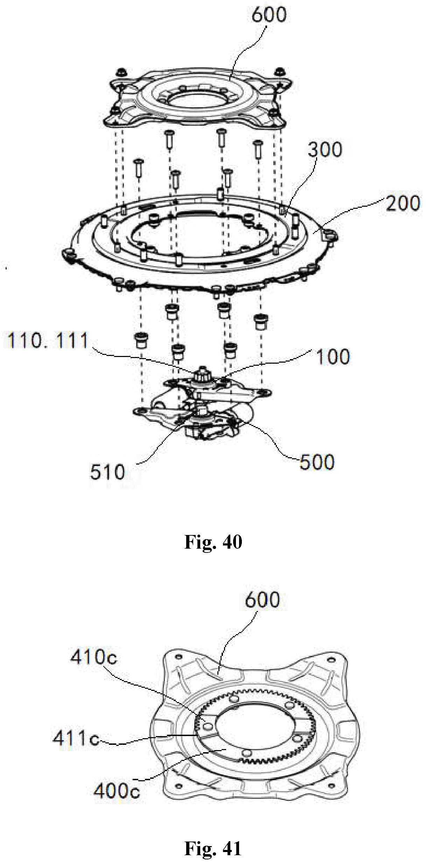

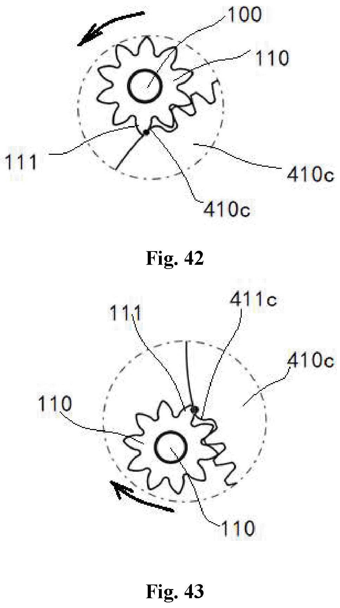

This embodiment differs from Embodiment 2 in that, referring to Figures 39 to 43, the restraining mechanism further includes a thickened portion 410c provided at at least one arbitrary angular position-e.g., at the 0° position and/or the 270° position-of the annular rack 400c. A stop structure 411c is provided on the thickened portion 410c-for example, the overall thickness of the annular rack 400c is 3 mm, and the thickened portion 410c is 6 mm.

The annular rack 400c of this embodiment is fixed on a transmission bracket 600 that rotates with the movable disc 300.

When the drive motor 100 drives the annular rack 400c via the drive gear 110 to the position of the stop structure 411c, the drive gear 110 engages with the stop structure 411c, causing the drive motor 100 to stall, so as to eliminate the gap between the tooth 111 on the drive gear 110 and the stop structure 411c.

This embodiment may retain the compensation motor 500 and the actuating wheel 510, enabling the movable disc 300 to stop at any angle within a central angle greater than 0° and less than 360°, as in Embodiment 1. Alternatively, the compensation motor 500 may be omitted, allowing the movable disc 300 to stop only at the stop structure 411c, causing the drive motor 100 to stall, so as to eliminate the gap between the tooth 111 on the drive gear 110 and the stop structure 411c.

An additional advantage of this embodiment is that, for existing rotating devices equipped with an annular rack 400c, when it is necessary to stop the movable disc 300 at a specific angle, there is no need to replace the annular rack 400c with an arcuate rack; instead, a thickened portion 410c can simply be added onto the annular rack 400c, saving replacement time and reducing parts inventory.

### Embodiment 9

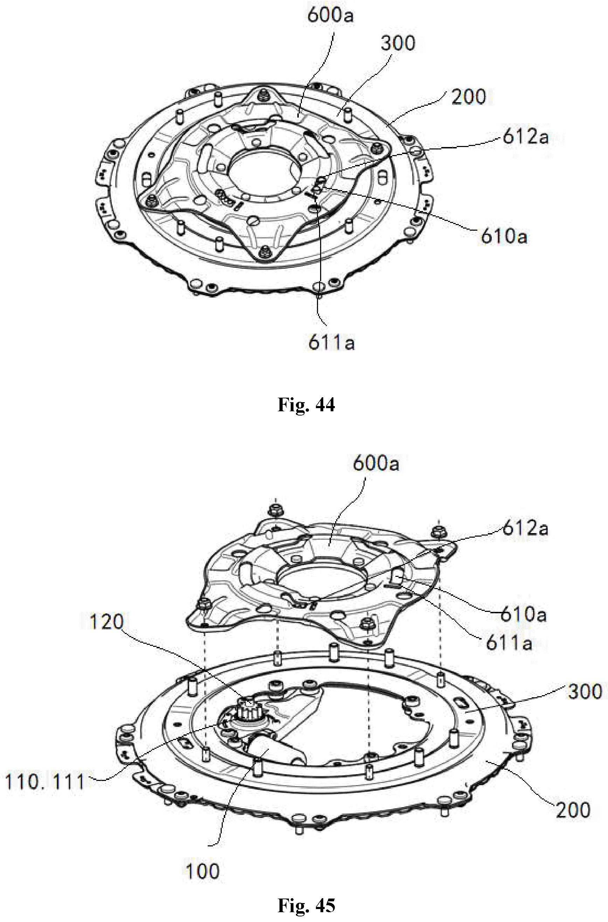

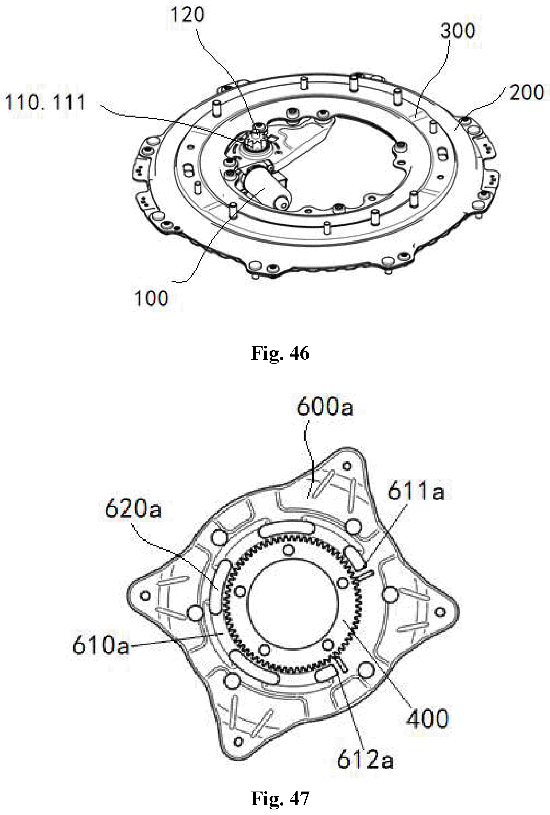

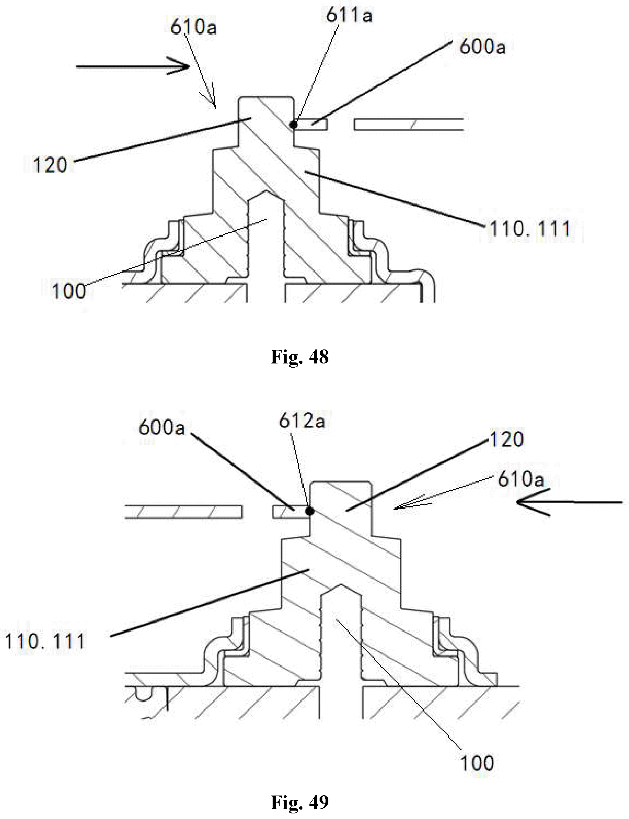

This embodiment differs from Embodiment 1 in that, referring to Figures 44 to 49, it adds a transmission bracket 600a, which is fixedly installed on the movable disc 300 and rotates synchronously with the movable disc 300. The restraining mechanism further includes a protruding shaft 120 provided on the output shaft of the drive motor 100 and at least one stop slot 610a having a central angle greater than 0° and less than 360° (e.g., 90°, 180°, or 270°) provided on the transmission bracket 600a.

The drive motor 100 is installed on the fixed disc 200, and the annular rack 400 is installed on the transmission bracket 600a (it could alternatively be installed on the movable disc 300). A stop position 611a and 612a is respectively provided at each end of the stop slot 610a. The protruding shaft 120 passes through the stop slot 610a and is movable relative to the movable disc 300 within the stop slot 610a. When the protruding shaft 120 moves relative to the movable disc 300 to the stop positions 611a or 612a at the two ends of the stop slot 610a, the transmission component 610a and the movable disc 300 are restricted from rotating, causing the drive motor 100 to stall so as to eliminate the aforementioned gap A.

In this embodiment, if it is only necessary to restrict the rotation of the movable disc 300 and cause the drive motor 100 to stall at stop positions 611a and 612a at the circumferential ends of the stop slot 610a, the compensation motor 500 and actuating wheel 510 of Embodiment 1 may be omitted.

In this embodiment, if it is further required to restrict the rotation of the movable disc 300 and cause the drive motor 100 to stall at any position between the stop positions 611a and 612a at the circumferential ends of the stop slot 610a in order to eliminate the gap A, then the compensation motor 500 and the actuating wheel 510 are retained. As in Embodiment 1, the movable disc 300 can be restricted from rotating at any position between the stop positions 611a and 612a at the circumferential ends of the stop slot 610a, causing both the drive motor 100 and the compensation motor 500 to stall, so as to eliminate the aforementioned gap A.

In this embodiment, protrusions may be added to the stop slot 610a to enhance structural strength at the region of the stop slot 610a. Vacant portions 620a may be provided as weight-reduction slots between these protrusions.

The remaining parts of this embodiment that are not described herein are the same as those in Embodiment 1.

### Embodiment 10

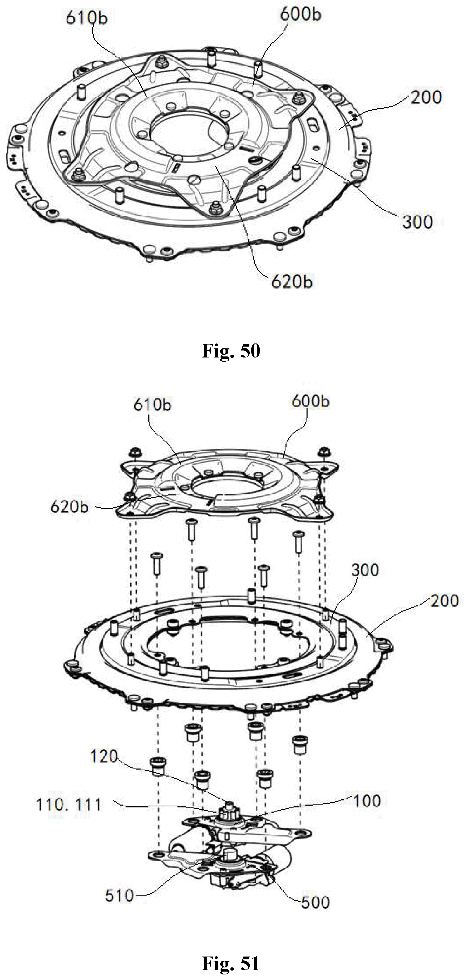

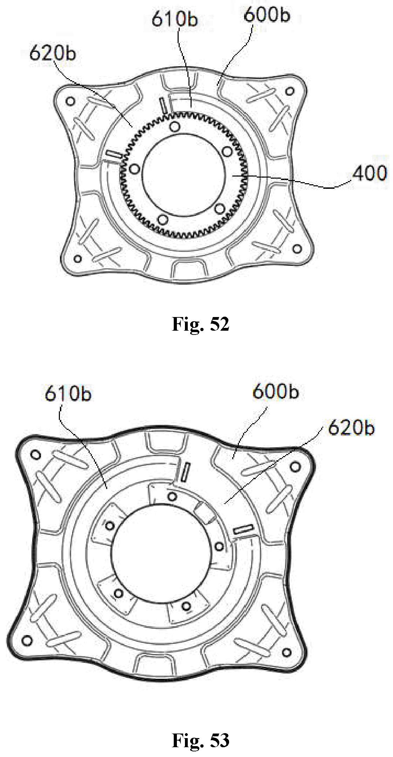

This embodiment differs from Embodiment 1 in that, as shown in FIGS. 50 to 54, a transmission bracket 600b is added. The transmission bracket 600b is fixedly installed on the movable disc 300 and rotates synchronously with the movable disc 300. The restraining mechanism includes a protruding shaft 120 provided on the output shaft of the drive motor 100 and at least one protrusion 610b disposed along the circumferential direction of the transmission bracket 600b, wherein the central angle of the protrusion 610b is greater than 0° and less than 360°. For example, the central angle of the protrusion 610b is 90°, 180°, or 270°.

The drive motor 100 is installed on the fixed disc 200, and the annular rack 400 is installed on the transmission bracket 600b (alternatively, it may also be installed on the movable disc 300).

If there is only one protrusion 610b, a recessed portion 620b is provided between the two ends of the protrusion 610b. If there are two or more protrusions 610b, a recessed portion 620b is provided between each pair of adjacent protrusions 610b.

The top surface of the protruding shaft 120 is lower than the lower side of the top portion of the protrusion 610b and higher than the upper side of the bottom portion of the recessed portion 620b, such that the protruding shaft 120 can move within the cavity beneath the protrusion 610b and can stop moving when it reaches either end of a recessed portion 620b.

The protruding shaft 120 extends into the cavity beneath the protrusion 610b and is movable therein. When the protruding shaft 120 moves to the position of a recessed portion 620b at either end of the cavity beneath the protrusion 610b, the transmission bracket 600b and the movable disc 300 are restricted from rotating, causing the drive motor 100 to stall and thereby eliminating the aforementioned gap A.

In this embodiment, if it is sufficient to provide recessed portions 620b only at the circumferential ends of the protrusion 610b to restrict rotation of the movable disc 300 and cause stalling of the drive motor 100, the compensation motor 500 and actuating wheel 510 of Embodiment 1 may be omitted.

In this embodiment, if it is further required to restrict rotation of the movable disc 300 and cause stalling of the drive motor 100 at any position within the protrusion 610b to eliminate the aforementioned gap A, the compensation motor 500 and actuating wheel 510 are retained, as in Embodiment 1, so that the movable disc 300 can be restricted from rotating at any position within the protrusion 610b, causing both the drive motor 100 and the compensation motor 500 to stall, so as to eliminate the aforementioned gap A.

The parts not described in this embodiment are the same as those in Embodiment 1.

### Embodiment 11

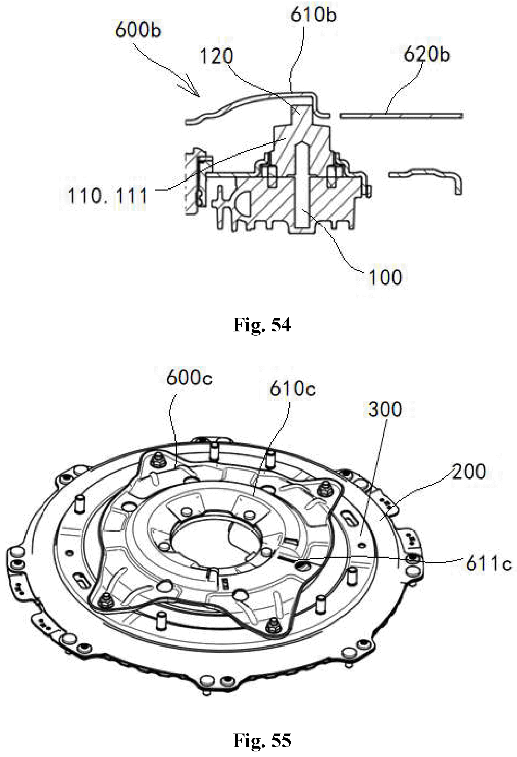

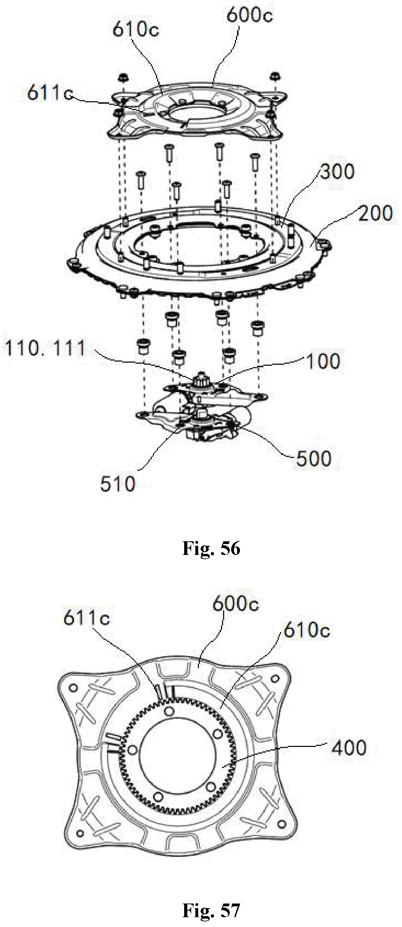

This embodiment differs from Embodiment 1 in that, as shown in FIGS. 55 to 58, a transmission bracket 600c is added. The transmission bracket 600c is fixedly installed on the movable disc 300 and rotates synchronously with the movable disc 300. The restraining mechanism includes a protruding shaft 120 provided on the output shaft of the drive motor 100, a protrusion 610c disposed along the circumferential direction of the transmission bracket 600c, and at least one stopper block 611c provided at an arbitrary position between 0° and 360° on the protrusion 610c-for example, at 90°, 180°, or 270°.

The drive motor 100 is installed on the fixed disc 200, and the annular rack 400 is installed on the transmission bracket 600c (alternatively, it may also be installed on the movable disc 300).

The top surface of the protruding shaft 120 is lower than the lower side surface of the top portion of the protrusion 610c and higher than the bottom surface of the stopper block 611c, such that the protruding shaft 120 can move within the cavity beneath the protrusion 610c and can stop moving when it reaches the end of a stopper block 611c.

The protruding shaft 120 extends into the cavity beneath the protrusion 610c and is movable therein. When the protruding shaft 120 moves to the position of the stopper block 611c within the cavity beneath the protrusion 610c, the transmission bracket 600c and the movable disc 300 are restricted from rotating, causing the drive motor 100 to stall and thereby eliminating the aforementioned gap A.

In this embodiment, if it is sufficient to provide a stopper block 611c at any position on the protrusion 610c to restrict rotation of the movable disc 300 and cause stalling of the drive motor 100, the compensation motor 500 and actuating wheel 510 of Embodiment 1 may be omitted.

In this embodiment, if it is further required to restrict rotation of the movable disc 300 and cause stalling of the drive motor 100 at other arbitrary positions within the protrusion 510b to eliminate the aforementioned gap A, the compensation motor 500 and actuating wheel 510 are retained, as in Embodiment 1, so that the movable disc 300 can be restricted from rotating at any position within the protrusion 610b, causing both the drive motor 100 and the compensation motor 500 to stall, so as to eliminate the gap A.

The parts not described in this embodiment are the same as those in Embodiment 1.

### Embodiment 12

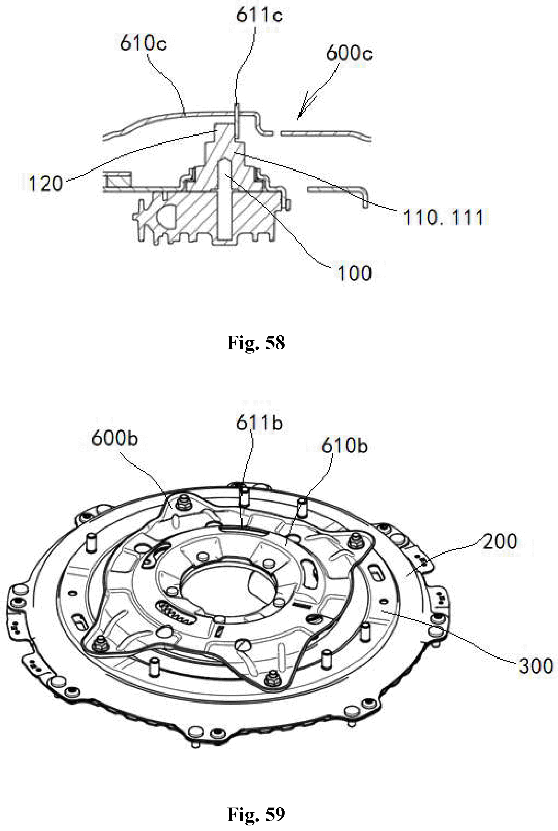

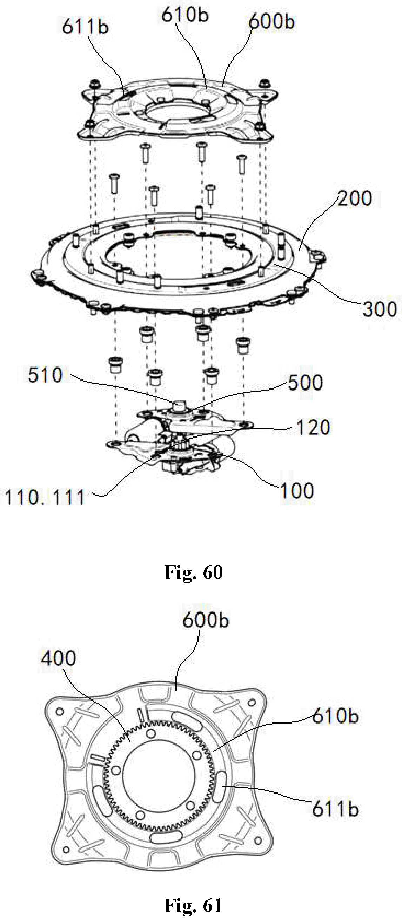

This embodiment differs from Embodiment 10 in that, as shown in FIGS. 59 to 61, an arc-shaped weight-reduction slot 611b is formed at the protrusion 610b.

This embodiment provides the arc-shaped weight-reduction slot 611b at the protrusion 610b, thereby reducing the weight of the transmission bracket 600b.

The remaining parts not described in this embodiment are the same as those in Embodiment 10.

### Embodiment 13

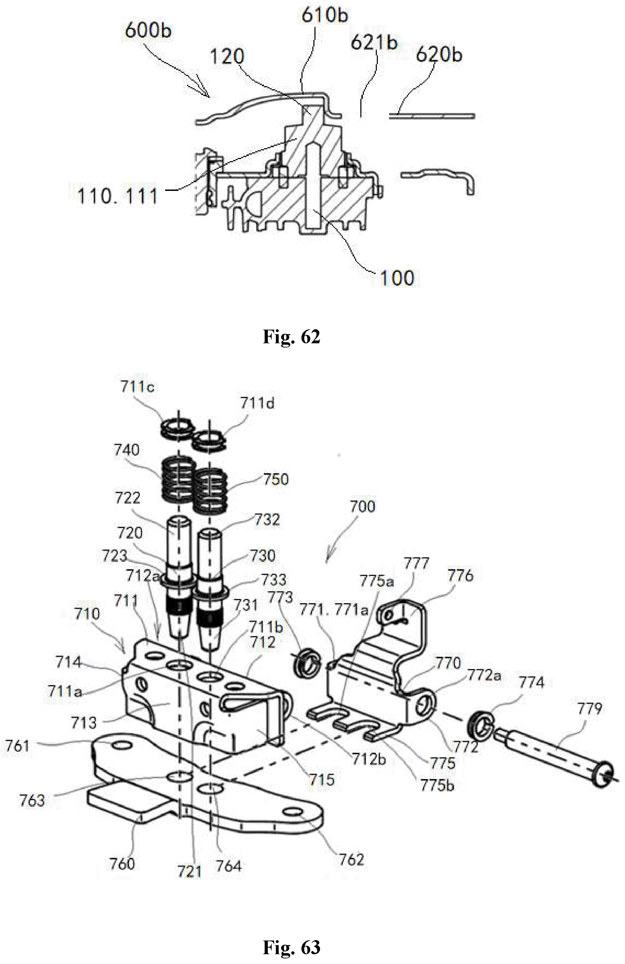

This embodiment differs from Embodiment 10 in that, as shown in FIG. 62, arc-shaped weight-reduction slots 621b are also provided at the recessed portions 620b, further reducing the weight of the transmission bracket 600b.

The remaining parts not described in this embodiment are the same as those in Embodiment 10.

### Embodiment 14

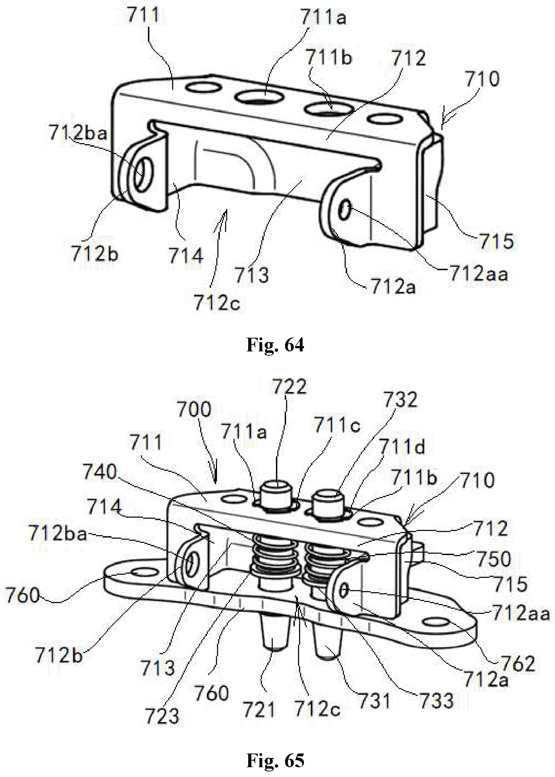

This embodiment differs from Embodiment 1 in that a locking mechanism is added. Referring to FIGS. 63 to 65, the illustrated locking mechanism includes a vertical pin-type locking mechanism 700 installed on the movable disc 300 of the rotating device, a locking hole 210 formed on the disc surface of the fixed disc 200 of the rotating device, and two through-holes 310 formed side by side on the movable disc 300. The locking hole 210 is an oblong hole aligned with the two through-holes 310.

On both sides of the locking hole 210 on the disc surface of the fixed disc 200 along the rotational direction of the movable disc 300, a ramp surface 220 and a peak surface 230 are respectively provided, with the locking hole 210 located at the highest position of the ramp surface 220, the peak surface 230.

The vertical pin-type locking mechanism 700 includes a lock pin bracket 710, two locking pins 720, 730, two lock pin return springs 740, 750, a lock-mounting bracket 760, and an unlocking bracket 770.

The lock pin bracket 710 has a top portion 711 and four side portions: 712 (the aforesaid first side portion), 713 (the aforesaid second side portion), 714 (the aforesaid third side portion), and 715 (the aforesaid fourth side portion). Side portions 712 and 713 are formed by bending downward from both sides of the top portion 711 and are symmetrically located on both sides of the top portion 711. Side portions 714 and 715 are formed by bending forward from both sides of side portion 713 and are welded to side portion 712. Two perforated holes 711a, 711b are formed at the top portion 711 for the second ends 722, 732 of the two locking pins 720, 730 to pass through. A noise-damping bushing 711c, 711d is installed in each of the perforated holes 711a, 711b.

Two locking ears 712a, 712b (the aforesaid second locking ears) are symmetrically provided on side portion 712 of the lock pin bracket 710, and a hinge hole 712aa, 712ba is formed in each of the locking ears 712a, 712b.

At both ends of the lock-mounting bracket 760, a bolt hole 761, 762 is respectively formed. At the middle position of the lock-mounting bracket 760, two lock pin holes 763, 764 are provided side by side.

On the unlocking bracket 770, two hinge ears 771, 772 (the aforesaid first hinge ears) are symmetrically provided, and a hinge hole 771a, 772a (the aforesaid first hinge hole) is formed in each of the hinge ears 771, 772. A fixed-pin bushing 773, 774 is installed in each of the hinge holes 771a, 772a.

An unlocking portion 775 is provided on the unlocking bracket 770, and two lock pin slot openings 775a, 775b are formed side by side at the unlocking portion 775. Additionally, an unlocking operation portion 776 is provided on the unlocking bracket 770.

The first ends 721, 731 of the two locking pins 720, 730 are conical to achieve zero-clearance locking. A protruding ring 723, 733 is provided at the intermediate position of each of the locking pins 720, 730.

During assembly, first, the lock pin return springs 740, 750 are sleeved onto the second ends 722, 732 of the two locking pins 720, 730. Then, the second ends 722, 732 of the two locking pins 720, 730 are inserted upward through the noise-damping bushings 711c, 711d. At this point, the lower ends of the two lock pin return springs 740, 750 abut against the protruding rings 723, 733 of the two locking pins 720, 730, respectively, while their upper ends abut against the top portion 711 of the lock pin bracket 710.

Next, the two lock pin holes 763, 764 of the lock-mounting bracket 760 are respectively fitted over the first ends 721, 731 of the two locking pins 720, 730, aligning the lock pin holes 763, 764 with the perforated holes 711a, 711b in the top portion 711 of the lock pin bracket 710. Then, the bottoms of the side portions 712, 713, 714, 715 of the lock pin bracket 710 are welded onto the upper surface of the lock-mounting bracket 760, leaving a notch 712c between the bottom of side portion 712 and the upper surface of the lock-mounting bracket 760.

Subsequently, the unlocking portion 775 of the unlocking bracket 770 is inserted through the notch between the bottom of side portion 712 of the lock pin bracket 710 and the upper surface of the lock-mounting bracket 760 into the interior of the lock pin bracket 710, such that the two lock pin slot openings 775a, 775b at the unlocking portion 775 engage below the corresponding protruding rings 723, 733 on the locking pins 720, 730, and the upper surface of the unlocking portion 775 contacts the lower surfaces of the protruding rings 723, 733, thereby drivingly connecting the unlocking bracket 770 to the two locking pins 720, 730 and driving the locking pins 720, 730 to unlock.

Simultaneously, the two hinge ears 771, 772 of the unlocking bracket 770 are inserted between the two locking ears 712a, 712b on side portion 712 of the lock pin bracket 710, and align the hinge holes 771a, 772a at the two hinge ears 771, 772 respectively with the two locking ears 712a, 712b on the side portion 712 of the lock pin bracket 710.

Then, an unlocking handle fixing pin 779 is sequentially inserted through the hinge hole at locking ear 712b at the side portion 712 of the lock pin bracket 710, the hinge hole 772a (with fixed-pin bushing 774) at the hinge ear 772 of the unlocking bracket 770, the hinge hole 771a (with fixed-pin bushing 773) at the hinge ear 771 of the unlocking bracket 770, and the hinge hole at the locking ear 712a at the side portion 712 of the lock pin bracket 710. Then, both ends of the unlocking handle fixing pin 779 are anchored to the locking ears 712a, 712b at the side portion 712 of the lock pin bracket 710, thereby pivotally mounting the unlocking bracket 770 on the lock pin bracket 710.

Since the two locking pins 720, 730 are vertically movably configured on the lock pin bracket 710, operating the unlocking operation portion 776 may cause the unlocking bracket 770 to flip about the unlocking handle fixing pin 779. When the unlocking operation portion 776 is flipped, the unlocking portion 775 drives the locking pins 720, 730 upward via the protruding rings 723, 733 on the locking pins 720, 730, compressing the lock pin return springs 740, 750, thereby achieving unlocking. Upon releasing the unlocking operation portion 776, the locking pins 720, 730 move downward to return to their original positions when the constraint on the two lock pin return springs 740, 750 is released, and simultaneously drive the unlocking bracket 770 back to its original position via the protruding rings 723, 733 on the locking pins 720, 730 and the unlocking portion 775.

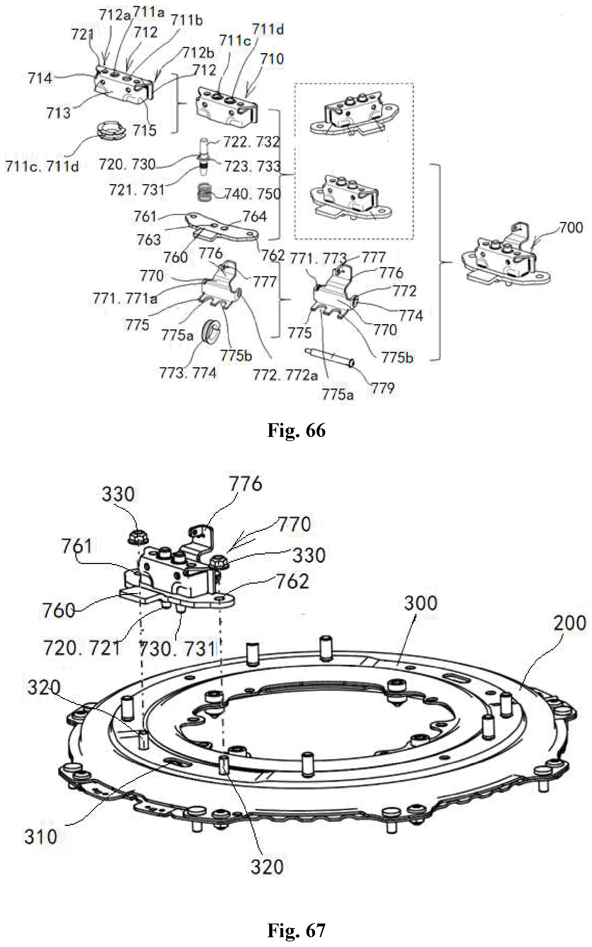

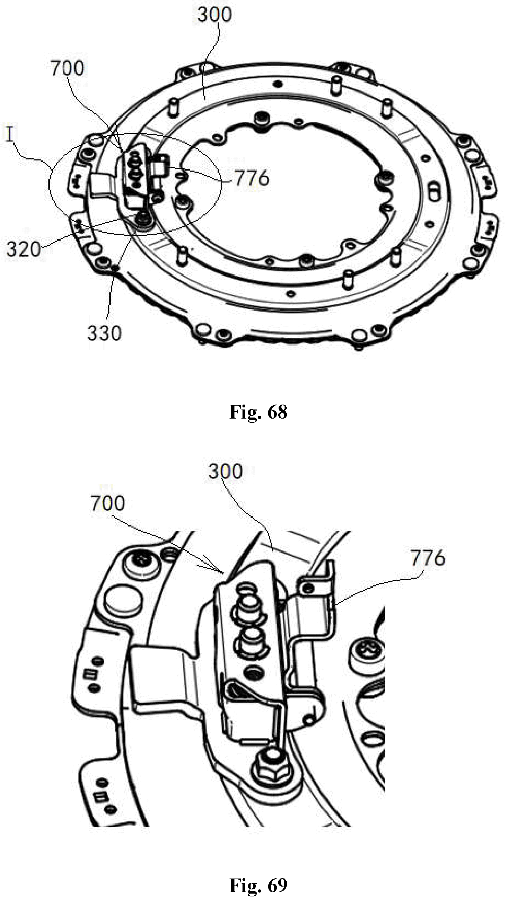

Referring to FIGS. 66 to 72, the method of mounting the above-described vertical pin-type locking mechanism 700 onto the movable disc 300 is as follows: two bolts 320 are anchored onto the movable disc 300. The bolt holes 761, 762 at both ends of the lock-mounting bracket 760 are fitted over the two bolts 320, aligning the two lock pin holes 763, 764 at the lock-mounting bracket 760 with the two through-holes 310 at the movable disc 300. The first ends 721, 731 of the two locking pins 720, 730 pass through the two through-holes 310 at the movable disc 300, and nuts 330 are then tightened to secure the assembly.

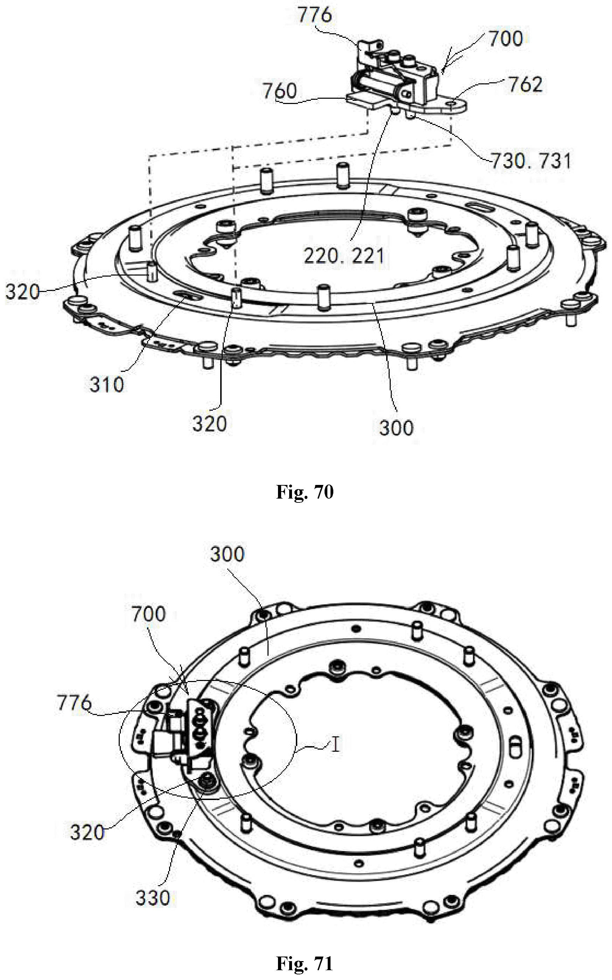

When installing the above-described vertical pin-type locking mechanism 700 onto the movable disc 300, it may be installed as shown in FIGS. 67 to 69, with the unlocking operation portion 776 oriented toward the inner side of the movable disc 300, or as shown in FIGS. 70 to 72, with the unlocking operation portion 776 oriented toward the outer side of the movable disc 300, according to requirements.

Referring to FIGS. 63 to 72 and FIGS. 74a to 74g, an unlocking cable lug 777 is provided on the unlocking operation portion 776, and one end of an unlocking cable 800 is connected to the unlocking cable lug 777, so that the unlocking bracket 770 can be flipped by the unlocking cable 800 to achieve unlocking.

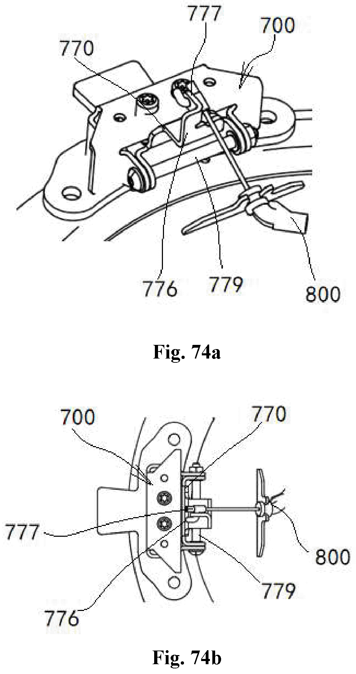

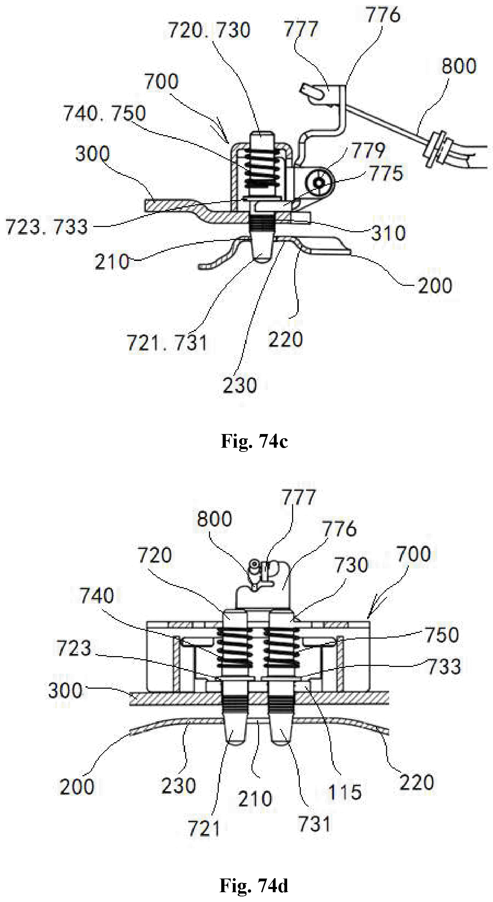

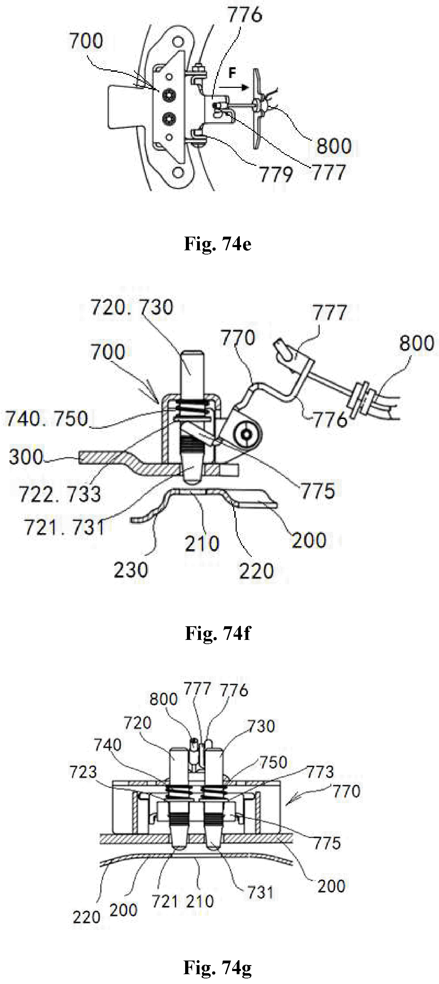

Referring to FIGS. 74a to 74g, the unlocking process of the above-described vertical pin-type locking mechanism 700 is as follows:
The unlocking cable 800 drives the unlocking bracket 770 to flip about the unlocking handle fixing pin 779. The unlocking portion 775 drives the locking pins 720, 730 upward via the protruding rings 723, 733 on the locking pins 720, 730, causing them to withdraw from the locking hole 210, thereby achieving unlocking.

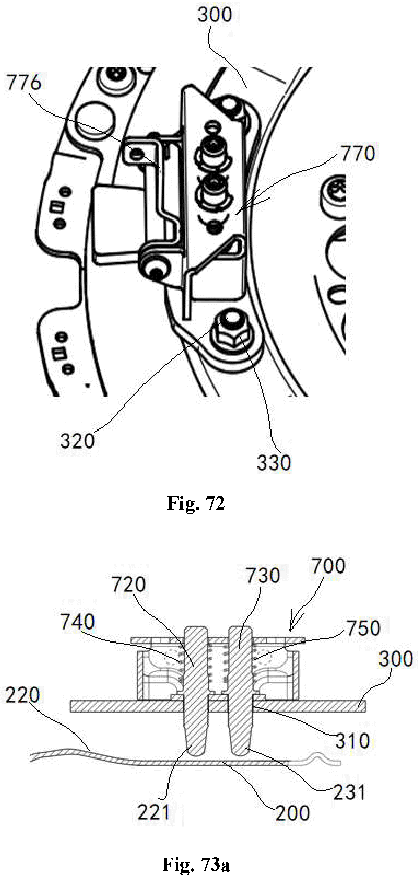

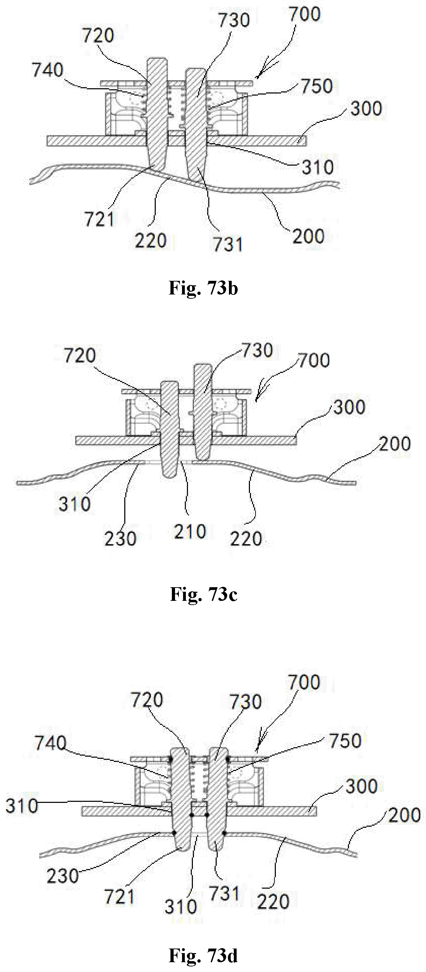

Referring to FIGS. 73a to 73d, when the above-described vertical pin-type locking mechanism 700 rotates with the movable disc 300 to the locking preparation position, the first ends 721, 731 of the two locking pins 720, 730 contact the ramp surface 220 of the fixed disc 200. The ramp surface 220 pushes the two locking pins 720, 730 upward, compressing the lock pin return springs 740, 750. When the two locking pins 720, 730 reach the position of the peak surface 230 and the locking hole 210, since the peak surface 230 no longer supports the two locking pins 720, 730, the two locking pins 720, 730 move downward under the restoring force of the lock pin return springs 740, 750, inserting into the locking hole 210 and completing the locking action.

### Embodiment 15

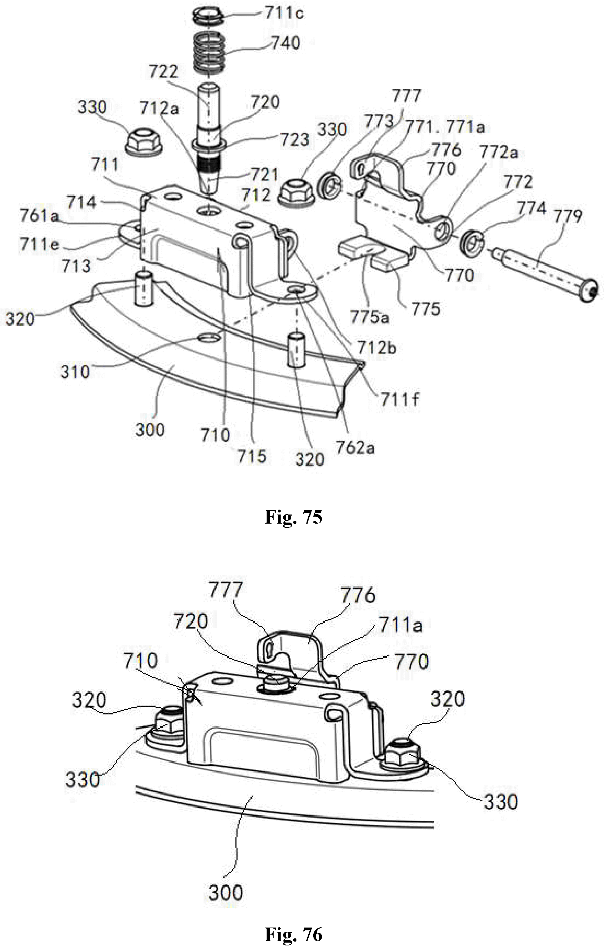

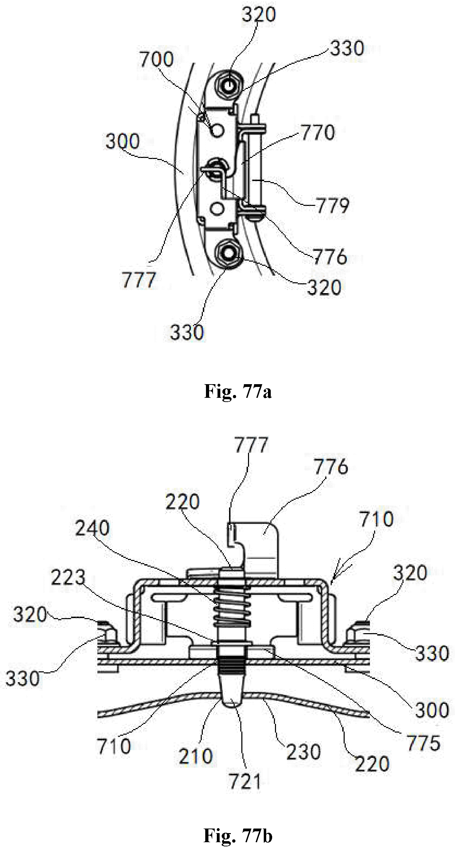

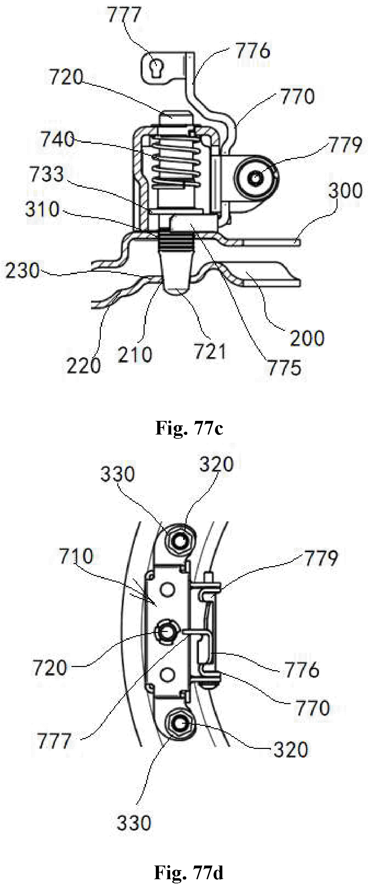

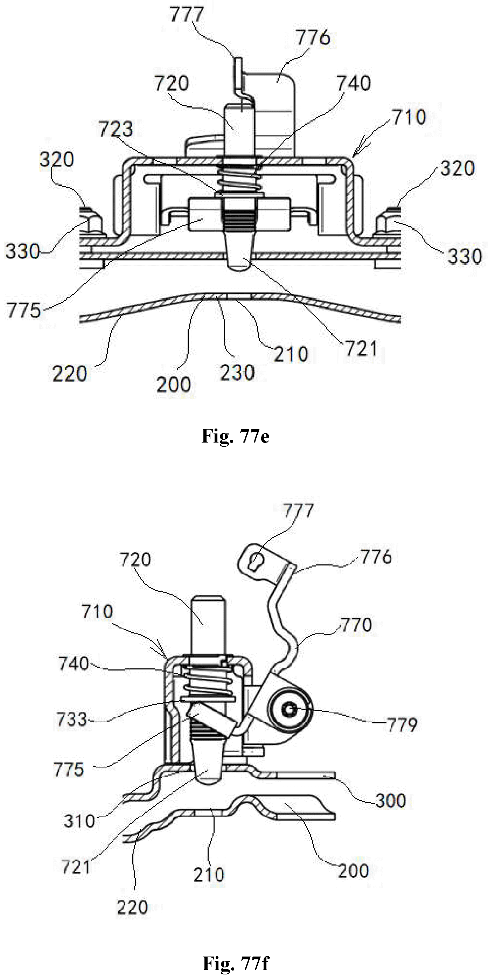

This embodiment differs from Embodiment 14 in that, as shown in FIGS. 75, 76, and 77a to 77f, only one locking pin is used-namely, locking pin 720. Correspondingly, only one perforated hole 711a is formed in the top portion 711 of the lock pin bracket 710, only one lock pin slot opening 775a is provided on the unlocking portion 775 of the unlocking bracket 770, and meanwhile only one through-hole 310 is formed on the movable disc 300. The locking hole 210 is a circular hole. The lock-mounting bracket 760, the lock pin return spring 750, and the noise-damping bushing 711d are omitted. Both ends of the top portion 711 of the lock pin bracket 710 are bent downward and outward to form two fixing ears 711e, 711f, in which bolt holes 761a, 762a are respectively formed. During installation, the bolt holes 761a, 762a are fitted over the two bolts 320, and nuts 330 are tightened to secure the assembly.

The remaining parts of this embodiment are the same as those in Embodiment 13, and the unlocking and locking principles are also identical to those in Embodiment 13.

### Embodiment 16

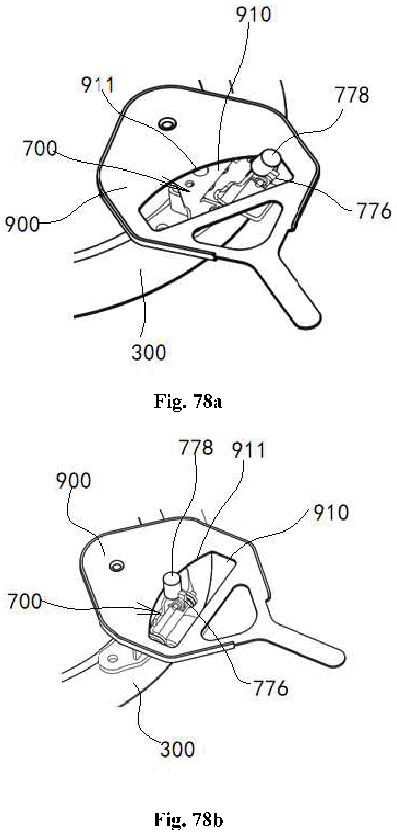

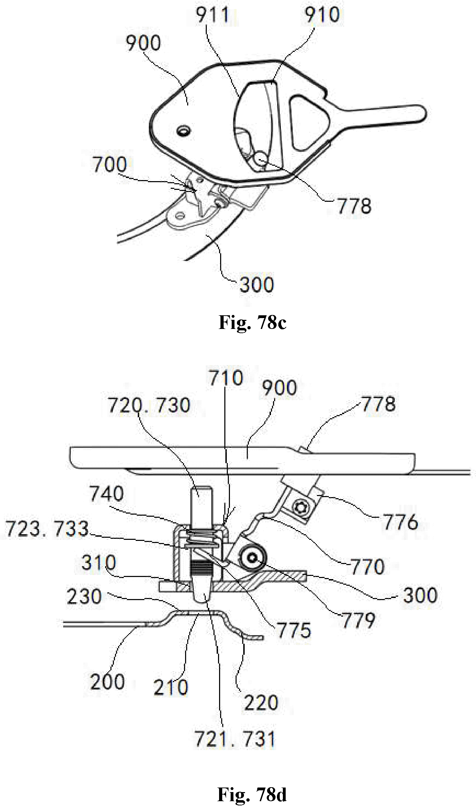

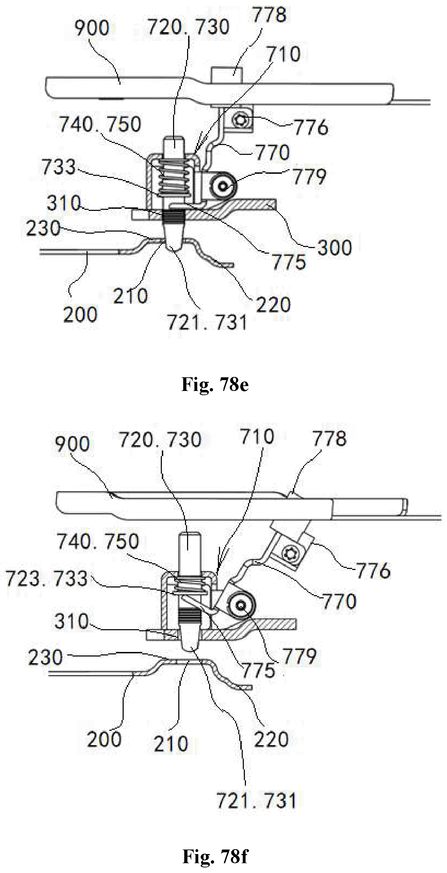

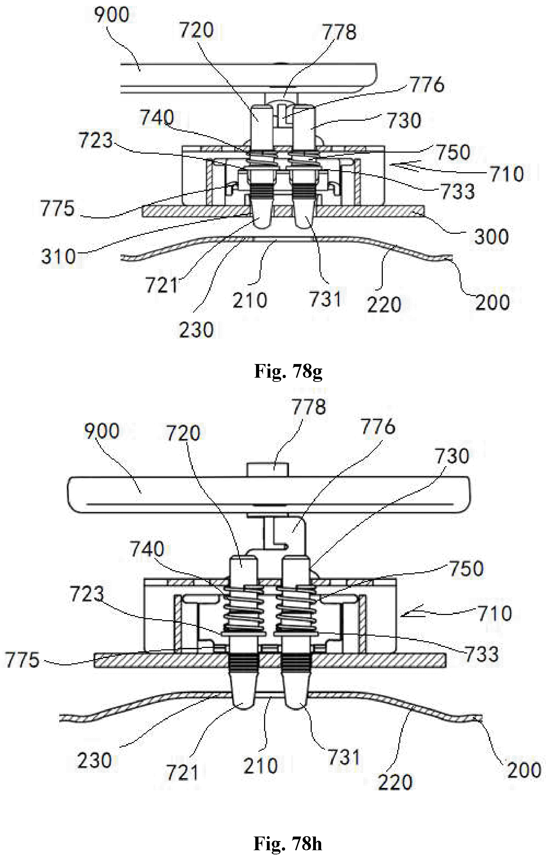

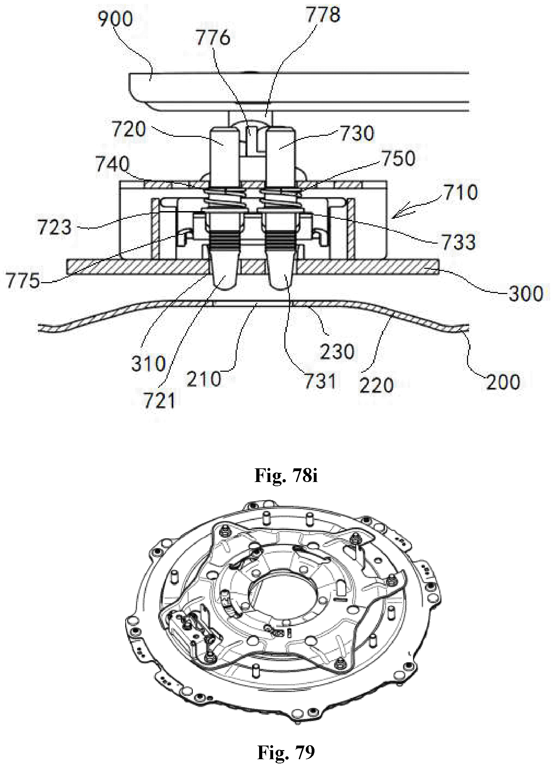

This embodiment differs from Embodiment 14 in that, as shown in FIGS. 78a to 78i, an unlocking pin 778 is installed on the unlocking operation portion 776, and an unlocking handle 900 is further included. The unlocking handle 900 is pivotally arranged on the movable disc 300. An unlocking slot 910 is provided on the unlocking handle 900, and the unlocking slot 910 has an arc-shaped slot edge 911. The unlocking pin 778 is inserted into the unlocking slot 910 and contacts the arc-shaped slot edge 911. When the unlocking handle 900 is rotated, the unlocking handle 900 drives the unlocking pin 778 via the arc-shaped slot edge 911, causing the unlocking bracket to flip about the unlocking handle fixing pin 779. The unlocking portion 775 then drives the locking pins 720, 730 to move upward via the protruding rings 723, 733 on the locking pins 720, 730, causing them to withdraw from the locking hole 210 and achieve unlocking.

### Embodiment 17

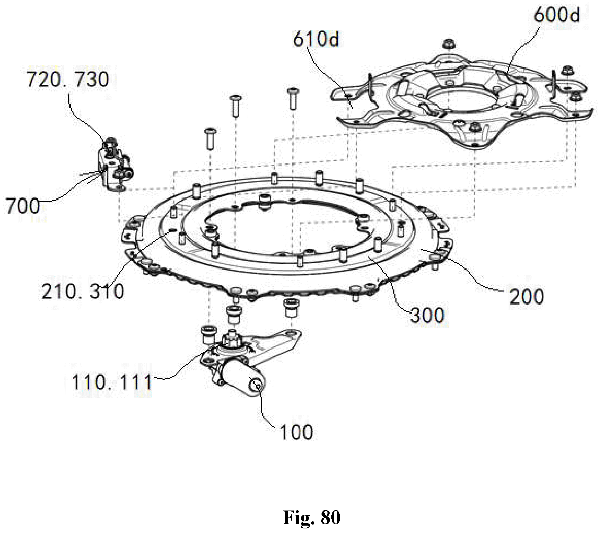

This embodiment differs from Embodiment 14, 15, or 16 in that, as shown in FIGS. 79 and 80, a locking mechanism and a rotating bracket 600d that rotates with the movable disc 300 are added.

A notch 610d is formed in the rotating bracket 600d. The locking mechanism includes a vertical pin-type locking mechanism 700 installed on the rotating bracket 600d at a position corresponding to the notch 610d, one or two locking holes 210 formed on the surface of the fixed disc 200, and one or two through-holes 310 formed side by side on the movable disc 300.

During locking, one locking pin 720 or two locking pins 720, 730 of the vertical pin-type locking mechanism 700 pass through one or two through-holes 310 and insert into one or two locking holes 210. During unlocking, the locking pin 720 or the two locking pins 720, 730 withdraw from the one or two through-holes 310 and the one or two locking holes 210.

The remaining parts of this embodiment are the same as those in Embodiment 14, 15, or 16. To facilitate understanding of the technical solutions disclosed in the various embodiments, Table 1 below briefly lists the technical features of each embodiment, corresponding to the descriptions thereof.

**Table**

| **Embodiment** | **Rack** | **Drive Motor** | **Compensation Motor** | **Transmission Component (Cover Plate)** | **Locking Mechanism** |
|---|---|---|---|---|---|
| 1 | Annular rack 400 | Y | Y | N | N |
| 2 | Annular rack 400 | Y | Y | Y | N |
| 3 | Arcuate rack 400a + stop structure 410a | Y | Y or N | N | N |
| 4 | Arcuate rack 400a + stop structure 410a | Y | Y or N | Y | N |
| 5 | Annular rack 400 + compensation rack 400b + stop structure 410b | Y | Y or N | N | N |
| 6 | Annular rack 400 + compensation rack 400b + stop structure 410b | Y | Y or N | Y | N |
| 7 | Annular rack 400c + thickened portion 410c + stop structure 411c | Y | Y or N | No transmission bracket; added transition bracket 310 | N |
| 8 | Annular rack 400c + thickened portion 410c + stop structure 411c | Y | Y or N | Y | N |
| 9 | Annular rack 400 | Drive motor + protruding shaft 120 | Y or N | Transmission bracket 600a + stop slot 610a | N |
| 10 | Annular rack 400 | Drive motor + protruding shaft 120 | Y or N | Transmission bracket 600b + protrusion 610b + recessed portion 620b | N |
| 11 | Annular rack 400 | Drive motor + protruding shaft 120 | Y or N | Transmission bracket 600c + protrusion 610c + stopper block 611c | N |
| 12 | Annular rack 400 | Drive motor + protruding shaft 120 | Y or N | Transmission bracket 600b + protrusion 610b + recessed portion 620b + arc-shaped weight-reduction slot 611b in protrusion 610b | N |
| 13 | Annular rack 400 | Drive motor + protruding shaft 120 | Y or N | Transmission bracket 600b + protrusion 610b + recessed portion 620b + arc-shaped weight-reduction slot 621b in recessed portion 620b | N |
| 14 | Annular rack 400 | Y | Y or N | N | Vertical pin-type locking mechanism 700 + two locking pins 720, 730 + unlocking cable 800 |
| 15 | Annular rack 400 | Y | Y or N | N | Vertical pin-type locking mechanism 700 + one locking pin 720 |
| 16 | Annular rack 400 | Y | Y or N | N | Vertical pin-type locking mechanism 700 + two locking pins 720, 730 + one unlocking pin 778 + unlocking handle 900 |
| 17 | Annular rack 400 | Y | Y or N | Y | Vertical pin-type locking mechanism 700 (two locking pins 720, 730 or one locking pin 720) installed on rotating bracket 600d |

In this specification, the singular forms "a," "said," and "the" include plural referents unless the context clearly indicates otherwise. The terms "comprising," "including," and "containing" used in this specification indicate the presence of the stated features but do not exclude the presence of one or more other features. The term "and/or" used in this specification includes any and all combinations of one or more of the associated listed items.

In this specification, when an element is referred to as being "on," "fixed on," "connected to," "joined to," etc., another element, it can be directly on, fixed on, connected to, joined to, or in contact with the other element, or intervening elements may be present. In this specification, when a feature is described as being "adjacent" to another feature, it may mean that the feature overlaps with the adjacent feature or is located above or below the adjacent feature.

## Claims

1. A rotating device, comprising:
a fixed disc;
a movable disc rotatably provided on the fixed disc via rolling elements;
a driving device configured to drive the movable disc to rotate relative to the fixed disc; wherein the driving device drives the movable disc to rotate relative to the fixed disc via a gear pair; **characterized in that** the rotating device further comprises:
at least one restraining mechanism configured to restrict rotation of the movable disc, wherein when the driving device drives the movable disc to stop at any position, the restraining mechanism restricts rotation of the movable disc, causing the driving device to stall, so as to eliminate the gap between adjacent teeth in the gear pair.

2. The rotating device according to claim 1, **characterized in that** the driving device comprises a drive motor; wherein the gear pair comprises a drive rack fixed on either the movable disc or the fixed disc, and a drive gear fixed on an output shaft of the drive motor.

3. The rotating device according to claim 2, **characterized in that** the restraining mechanism comprises a compensation motor and at least one actuating tooth fixed on an output shaft of the compensation motor; wherein during rotation of the movable disc driven by the drive motor via the gear pair, the actuating tooth does not mesh with the drive rack; when the drive motor drives the movable disc to stop at any position, the compensation motor rotates in a direction opposite to the driving direction of the movable disc, driving the actuating tooth to rotate to a meshing position where it meshes with the drive rack and restricts rotation of the movable disc.

4. The rotating device according to claim 3, **characterized in that** when the actuating tooth meshes with the drive rack, the compensation motor also stalls, thereby eliminating the gap between the actuating tooth and the drive rack, and the driving device stops rotating at this moment.

5. The rotating device according to claim 3, **characterized in that** an actuating wheel is provided on the output shaft of the compensation motor, and at least one actuating tooth is circumferentially arranged on the actuating wheel; wherein during normal rotation of the movable disc, the drive rack normally does not contact the actuating wheel.

6. The rotating device according to claim 3, **characterized in that** the drive motor and the compensation motor are circumferentially arranged around the periphery or within the inner bore of the drive rack.

7. The rotating device according to claim 6, **characterized in that** the drive motor and the compensation motor are installed on the fixed disc, and the drive rack is installed on the movable disc; or the drive motor and the compensation motor are installed on the movable disc, and the drive rack is installed on the fixed disc.

8. The rotating device according to claim 7, **characterized in that**, for the configuration where the drive motor and the compensation motor are installed on the fixed disc and the drive rack is installed on the movable disc, the rotating device further comprises a transmission component that rotates synchronously with the movable disc, and the drive rack is fixed on the transmission component.

9. The rotating device according to any one of claims 3 to 8, **characterized in that** the drive rack is a first arcuate rack or an annular rack.

10. The rotating device according to claim 9, **characterized in that** the central angle of the first arcuate rack is any angle greater than 0° and less than 360°.

11. The rotating device according to claim 10, **characterized in that** the central angle of the first arcuate rack is 90°, 180°, or 270°.

12. The rotating device according to claim 2 or 3, **characterized in that** the drive rack is a second arcuate rack, wherein the restraining mechanism comprises first stop structures provided at both ends of the second arcuate rack; wherein the driving device comprises a drive motor and a drive gear fixed on an output shaft of the drive motor; wherein the drive gear meshes with the second arcuate rack and drives the movable disc to rotate relative to the fixed disc; wherein when the drive motor drives the drive rack to rotate to the position of the first stop structures, the drive gear engages with the first stop structures, causing the drive motor to stall.

13. The rotating device according to claim 12, **characterized in that** the central angle of the second arcuate rack is any angle greater than 0° and less than 360°.

14. The rotating device according to claim 13, **characterized in that** the central angle of the second arcuate rack is 90°, 180°, or 270°.

15. The rotating device according to claim 12, **characterized in that** the drive motor is installed on the fixed disc and the second arcuate rack is installed on the movable disc; or the drive motor is installed on the movable disc and the second arcuate rack is installed on the fixed disc.

16. The rotating device according to claim 15, **characterized in that**, for the configuration where the drive motor is installed on the fixed disc and the second arcuate rack is installed on the movable disc, the rotating device further comprises a transmission component that rotates synchronously with the movable disc, and the second arcuate rack is fixed on the transmission component.

17. The rotating device according to claim 2 or 3, **characterized in that** the drive rack is an annular rack, wherein the restraining mechanism comprises a compensation rack, which is fixed together with the drive rack along the same circumference; wherein the drive gear simultaneously meshes with both the drive rack and the compensation rack; wherein the central angle of the compensation rack is any angle greater than 0° and less than 360°; wherein a second stop structure is provided at each end of the compensation rack; wherein when the drive motor drives the drive rack and the compensation rack to rotate to the positions of the second stop structures, the drive gear engages with the second stop structures, causing the drive motor to stall.

18. The rotating device according to claim 17, **characterized in that** the central angle of the compensation rack is 90°, 180°, or 270°.

19. The rotating device according to claim 17, **characterized in that** the drive motor is installed on the fixed disc, and the drive rack and the compensation rack are installed on the movable disc; or the drive motor is installed on the movable disc, and the drive rack and the compensation rack are installed on the fixed disc.

20. The rotating device according to claim 19, **characterized in that**, for the configuration where the drive motor is installed on the fixed disc and the drive rack and the compensation rack are installed on the movable disc, the rotating device further comprises a transmission component that rotates synchronously with the movable disc, and the drive rack and the compensation rack are fixed on the transmission component.

21. The rotating device according to claim 2 or 3, **characterized in that** the restraining mechanism comprises thickened portions provided at at least one angular position of the drive rack, wherein third stop structures are provided on the thickened portions; wherein when the drive motor drives the drive rack to rotate to the position of the third stop structures, the drive gear engages with the third stop structures, causing the drive motor to stall.

22. The rotating device according to claim 21, **characterized in that** the angular position is the 0° position and/or the 270° position.

23. The rotating device according to claim 22, **characterized in that** the drive motor is installed on the fixed disc and the drive rack is installed on the movable disc; or the drive motor is installed on the movable disc and the drive rack is installed on the fixed disc.

24. The rotating device according to claim 23, **characterized in that**, for the configuration where the drive motor is installed on the fixed disc and the drive rack is installed on the movable disc, the rotating device further comprises a transmission component that rotates synchronously with the movable disc, and the drive rack is fixed on the transmission component.

25. The rotating device according to claim 2 or 3, **characterized in that** the rotating device comprises a transmission component that rotates synchronously with the movable disc; wherein the restraining mechanism comprises a protruding shaft provided on the output shaft of the drive motor and a stop slot having a central angle greater than 0° and less than 360°, circumferentially provided on the transmission component; wherein the drive motor is installed on the fixed disc, wherein the drive rack is installed on the transmission component or on the movable disc; wherein a stop position is provided at each end of the stop slot; wherein the protruding shaft passes through the stop slot and is movable therein; wherein when the protruding shaft moves to the stop positions at the two ends of the stop slot, the transmission component, the drive rack, and the movable disc are restricted from rotating, causing the drive motor to stall.

26. The rotating device according to claim 2 or 3, **characterized in that** the rotating device comprises a transmission component that rotates synchronously with the movable disc; wherein the restraining mechanism comprises a protruding shaft provided on the output shaft of the drive motor, a protrusion circumferentially provided on the transmission component, and at least one stopper block provided at an arbitrary position within the protrusion; wherein the drive motor is installed on the fixed disc, and the drive rack is installed on the transmission component or on the movable disc; wherein the protruding shaft extends into a cavity beneath the protrusion and is movable therein; wherein when the protruding shaft moves to the position of the stopper block, the transmission component, the drive rack, and the movable disc are restricted from rotating, causing the drive motor to stall.

27. The rotating device according to claim 2 or 3, **characterized in that** the rotating device comprises a transmission component that rotates synchronously with the movable disc; wherein the restraining mechanism comprises a protruding shaft provided on the output shaft of the drive motor and at least one protrusion having a central angle greater than 0° and less than 360°, circumferentially provided on the transmission component; wherein the drive motor is installed on the fixed disc, and the drive rack is installed on the transmission component or on the movable disc; wherein a recessed portion is provided between the two ends of a protrusion or between adjacent protrusions; wherein the protruding shaft extends into a cavity beneath the protrusion and is movable therein; wherein when the protruding shaft moves to the recessed portions at the two ends of the cavity beneath the protrusion, the transmission component, the drive rack, and the movable disc are restricted from rotating, causing the drive motor to stall.

28. The rotating device according to claim 27, **characterized in that** the top surface of the protruding shaft is lower than the lower side surface of the top portion of the protrusion and higher than the upper side surface of the bottom portion of the recessed portion.

29. The rotating device according to claim 27, **characterized in that** the central angle of the protrusion is 90°, 180°, or 270°.

30. The rotating device according to claim 26 or 27, **characterized in that** a first arc-shaped weight-reduction slot is formed in the protrusion.

31. The rotating device according to claim 27, **characterized in that** a second arc-shaped weight-reduction slot is formed in the recessed portion.

32. The rotating device according to claim 2 or 3, **characterized in that** the rotating device further comprises: a locking mechanism installed on the movable disc or the fixed disc; wherein the locking mechanism is capable of locking the movable disc and the fixed disc together at least at one position and restricting rotation of the movable disc relative to the fixed disc, causing the drive motor to stall.

33. The rotating device according to claim 32, **characterized in that** the rotating device further comprises a transmission component that rotates synchronously with the movable disc; wherein the locking mechanism is installed on the transmission component, the movable disc, or the fixed disc, wherein the locking mechanism is capable of locking the transmission component and/or the movable disc together with the fixed disc at least at one position and restricting rotation of the transmission component and the movable disc relative to the fixed disc, causing the drive motor to stall.

34. The rotating device according to claim 33, **characterized in that** at least one through-hole is provided on the movable disc or the transmission component, wherein at least one locking hole is provided on the fixed disc, wherein the locking mechanism comprises at least one locking pin, wherein the locking pin is capable of passing through the through-hole and the locking hole to lock the transmission component and/or the movable disc together with the fixed disc.

35. The rotating device according to claim 34, **characterized in that** the locking mechanism is installed on any one of the transmission component, the movable disc, and the fixed disc.

36. The rotating device according to claim 35, **characterized in that** the locking mechanism further comprises:
a lock pin bracket fixed correspondingly on any one of the transmission component, the movable disc, and the fixed disc; wherein at least one locking pin is vertically or horizontally movably arranged on the lock pin bracket.

37. The rotating device according to claim 36, **characterized in that** the first end of the locking pin, which is to be engaged into the locking hole, is conical to achieve zero-clearance locking.

38. The rotating device according to claim 37, **characterized in that** the lock pin bracket has a top portion and four side portions, wherein the four side portions are a first side portion, a second side portion, a third side portion, and a fourth side portion; wherein at least one perforated hole is provided at the top portion for allowing the second end, which is opposite to the first end, of the locking pin to pass through.

39. The rotating device according to claim 38, **characterized in that** the first side portion and the second side portion are formed by bending downward from the first side and the second side of the top portion and are symmetrically located on the first side and the second side of the top portion; wherein the third side portion and the fourth side portion are formed by bending forward from both sides of the second side portion and are welded to the first side portion.

40. The rotating device according to claim 38, **characterized in that** a noise-damping bushing for the locking pin is installed in the corresponding perforated hole, and the second end of the locking pin passes through the noise-damping bushing for the locking pin.

41. The rotating device according to claim 40, **characterized in that** the locking mechanism further comprises:
an unlocking bracket pivotally arranged on the lock pin bracket, wherein the unlocking bracket is drivingly connected to the locking pin and drives the locking pin to unlock.

42. The rotating device according to claim 41, **characterized in that** the unlocking bracket is pivotally arranged on the lock pin bracket via an unlocking handle fixing pin.

43. The rotating device according to claim 42, **characterized in that** two first hinge ears are provided on the unlocking bracket, and a first hinge hole is provided in each first hinge ear.

44. The rotating device according to claim 43, **characterized in that** a first fixed-pin bushing is installed in each first hinge hole, and both ends of the unlocking handle fixing pin pass through the first fixed-pin bushings respectively.

45. The rotating device according to claim 43, **characterized in that** two second locking ears are provided on the first side portion of the lock pin bracket, and a second hinge hole is provided in each second locking ear, wherein both ends of the unlocking handle fixing pin pass through the second hinge holes respectively and are anchored.

46. The rotating device according to claim 45, **characterized in that** a second fixed-pin bushing is installed in each second hinge hole, and both ends of the unlocking handle fixing pin pass through the second fixed-pin bushings respectively.

47. The rotating device according to claim 41, **characterized in that** an unlocking portion is provided on the unlocking bracket, and at least one lock pin slot opening is provided on the unlocking portion; wherein a protruding ring is provided at an intermediate position of the corresponding locking pin; wherein the unlocking portion is insertable into the lock pin bracket from the bottom of the first side portion of the lock pin bracket, wherein the corresponding lock pin slot opening on the unlocking portion is snappable beneath the protruding ring on the corresponding locking pin, such that the upper surface of the unlocking portion contacts the lower surface of the protruding ring, and the unlocking bracket actuates the locking pin upward via the protruding ring to unlock.

48. The rotating device according to claim 47, **characterized in that** a lock pin return spring is sleeved onto the second end of the corresponding locking pin, wherein the lower end of the lock pin return spring abuts against the protruding ring, and the upper end of the lock pin return spring abuts against the lower side of the top portion of the lock pin bracket.

49. The rotating device according to claim 48, **characterized in that** the rotating device further comprises a lock-mounting bracket, which is installed via fasteners onto any one of the transmission component, the movable disc, and the fixed disc; wherein the bottoms of the first side portion, second side portion, third side portion, and fourth side portion of the lock pin bracket are welded onto the lock-mounting bracket.

50. The rotating device according to claim 49, **characterized in that** a notch is left between the bottom of the first side portion and the upper surface of the lock-mounting bracket, wherein the unlocking portion is insertable into the lock pin bracket through the notch.

51. The rotating device according to claim 49, **characterized in that** at least one lock pin hole is provided on the lock-mounting bracket, wherein the lock pin hole is aligned with the through-hole on the movable disc, wherein the first end of the locking pin is able to pass through the lock pin hole and the through-hole.

52. The rotating device according to claim 49, **characterized in that** an unlocking operation portion is provided on the unlocking bracket, wherein by operating the unlocking operation portion, the unlocking bracket can be actuated to flip, thereby achieving unlocking.

53. The rotating device according to claim 52, **characterized in that** when the locking mechanism is installed onto any one of the transmission component, the movable disc, and the fixed disc, the locking mechanism can be installed either with the unlocking operation portion oriented toward the outer side of the movable disc or with the unlocking operation portion oriented toward the inner side of the movable disc.

54. The rotating device according to claim 52, **characterized in that** an unlocking cable lug is provided on the unlocking operation portion, and one end of an unlocking cable is connected to the unlocking cable lug.

55. The rotating device according to claim 52, **characterized in that** an unlocking pin is installed on the unlocking operation portion, and an unlocking handle is further included; wherein the unlocking handle is pivotally arranged on the movable disc; wherein an unlocking slot is provided on the unlocking handle, and the unlocking slot has an arc-shaped slot edge; wherein the unlocking pin is inserted into the unlocking slot and contacts the arc-shaped slot edge; wherein when the unlocking handle is rotated, the unlocking handle drives the unlocking pin via the arc-shaped slot edge, and actuates the unlocking bracket to unlock.

56. The rotating device according to claim 34, **characterized in that** ramp surfaces are provided respectively on both sides of the locking hole on the surface of the fixed disc along the rotational direction of the movable disc, with the locking hole located at the horizontal level of the highest position of the ramp surfaces.

57. The rotating device according to claim 34, **characterized in that** two locking pins are provided, correspondingly two through-holes are provided, and the locking hole is an oblong hole.

58. The rotating device according to claim 57, **characterized in that** the two locking pins are arranged parallel to each other and can respectively pass through the two through-holes to insert into the locking hole for locking.

59. The rotating device according to claim 38, **characterized in that** two perforated holes are formed in the top portion.

60. The rotating device according to claim 47, **characterized in that** two lock pin slot openings are provided side by side on the unlocking portion.

61. The rotating device according to claim 51, **characterized in that** two lock pin holes are provided side by side on the lock-mounting bracket, and the two lock pin holes are aligned one-to-one with the corresponding through-holes on the movable disc.

62. The rotating device according to claim 26, **characterized in that** the top surface of the protruding shaft is lower than the lower side surface of the top portion of the protrusion and higher than the bottom surface of the stopper block.

63. The rotating device according to claim 26, **characterized in that** the stopper block is provided at the 90°, 180°, or 270° position.

64. A seat, **characterized in that** it comprises the rotating device according to any one of claims 1 to 63.
